# EUROPEAN PATENT SPECIFICATION

(11) **EP 4 240 034 B1**
(45) Date of publication and mention of the grant of the patent: **30.09.2026**
(21) Application number: 21909337.4
(22) Date of filing: 20.12.2021
(51) Int. Cl.: H04W 4/70, H04W 76/14, H04W 88/06, H04W 12/55, H04W 4/08, H04L 67/104, H04W 8/00, H04W 84/18, H04W 4/80, H04W 12/03

(54) **COMMUNICATION METHOD AND SYSTEM, AND ELECTRONIC DEVICE**
KOMMUNIKATIONSVERFAHREN UND -SYSTEM SOWIE ELEKTRONISCHE VORRICHTUNG
PROCÉDÉ ET SYSTÈME DE COMMUNICATION, ET DISPOSITIF ÉLECTRONIQUE

(30) Priority: 25.12.2020 CN 202011568967
(43) Date of publication of application: 06.09.2023
(73) Proprietor: Huawei Technologies Co., Ltd., Shenzhen, Guangdong 518129 (CN)
(72) Inventor: ZHANG, Li, Shenzhen, Guangdong 518129 (CN); MENG, Meng, Shenzhen, Guangdong 518129 (CN); LIAO, Xin, Shenzhen, Guangdong 518129 (CN)
(74) Representative: Pfenning, Meinig & Partner mbB
(86) International application number: PCT/CN2021/139669
(87) International publication number: WO 2022/135341

(56) References cited:
- WO-A1-2019/090712
- WO-A1-2020/062344
- CN-A- 109 156 041
- CN-A- 111 818 669
- CN-A- 112 118 539
- US-A1- 2002 196 764
- US-A1- 2014 323 048
- US-A1- 2019 342 933
- US-A1- 2020 117 331
- US-A1- 2020 245 386

## Description

### TECHNICAL FIELD

Embodiments of this application relate to the communication field, and in particular, to a communication method and system, and an electronic device.

### BACKGROUND

With rapid development of communication technologies, application scenarios of a wireless fidelity (wireless fidelity, Wi-Fi) network are increasing. Currently, a manner of establishing a Wi-Fi connection between a plurality of devices is usually based on the peer-to-peer (Peer-to-Peer, P2P) protocol in the 802.11 protocol. However, when the Wi-Fi connection is established based on the P2P protocol, the devices need to negotiate respective roles of the devices. Correspondingly, due to limitations on different roles in the protocol, a Wi-Fi connection may fail to be established between devices playing specific roles. Consequently, user experience is affected.
US2019342933A1 discloses a communication establishment method including: receiving, by a first terminal, a first broadcast message of a first wireless communications mode sent by a second terminal, where the first broadcast message carries a second wireless communications mode supported by the second terminal and a status and/or supported protocol information of the second wireless communications mode; and determining, by the first terminal based on the second wireless communications mode supported by the second terminal and the status and/or the supported protocol information of the second wireless communications mode, whether to connect to the second terminal. According to the foregoing method provided in the embodiments of the present invention, in a first wireless communication phase, a status and/or a supported protocol of a second wireless communications mode can be obtained, so that the second wireless communications mode is learned of in advance and terminals are filtered, thereby improving efficiency of selecting a wireless communications mode and establishing a communication connection. US2014323048A1 discloses a method and apparatus for establishing communication between a plurality of devices. A first advertising packet comprising an identifier of the first electronic device is broadcast to at least one other device in a first radio communication mode. At least one responding advertising packet request is received from the at least one other device. A communication link in a second radio communication mode is established with a device from which a responding advertising packet was received.

### SUMMARY

To resolve the foregoing technical problem, this application provides a communication method and system, and an electronic device. In the method, electronic devices may discover each other according to a Bluetooth protocol, and establish a Wi-Fi connection, to exchange data through the Wi-Fi connection. In this case, a communication method applicable to an application scenario of multi-device connection is provided. According to the method, different devices can establish a Wi-Fi connection, and exchange data through the Wi-Fi connection. In this way, a communication manner in which devices are peers can be implemented, and an exchange mode of multipoint-to-multipoint Wi-Fi transmission can be further implemented.

The invention is defined in the appended set of claims. According to a first aspect, an embodiment of this application provides a communication system. The system includes a first electronic device, a second electronic device, and a third electronic device. The first electronic device is configured to receive a first operation when the first electronic device and the second electronic device exchange data of a first service through a first Wi-Fi connection. The first electronic device establishes a first Bluetooth connection to the third electronic device in response to the first operation. The first electronic device sends address information of the first electronic device to the third electronic device through the first Bluetooth connection. The third electronic device is configured to receive the address information of the first electronic device that is sent by the first electronic device. The third electronic device establishes a second Wi-Fi connection to the first electronic device based on the address information of the first electronic device. The third electronic device exchanges data of a second service with the first electronic device through the second Wi-Fi connection. In this way, information required for Wi-Fi connection establishment, for example, address information of an electronic device, may be transmitted between electronic devices in advance through a Bluetooth connection. This improves efficiency of Wi-Fi connection establishment. In addition, an electronic device may establish a Wi-Fi connection to either of two electronic devices that are in communication, and data exchange is performed through the Wi-Fi connection. In this case, a communication manner in which devices are peers can be implemented, and an exchange mode of multipoint-to-multipoint Wi-Fi transmission can be further implemented.

For example, the first electronic device may be a mobile phone A in this embodiment of this application, or may be a tablet, and the third electronic device may be a mobile phone B. To be specific, the mobile phone B may establish a Wi-Fi connection to either of the mobile phone A or the tablet that are performing Wi-Fi data exchange. In this way, a problem that the mobile phone B can communicate only with a specific role due to a role limitation in the 802.11 protocol, for example, the mobile phone B can communicate only with the mobile phone A can be resolved.

According to the first aspect, the third electronic device is further configured to receive a second operation when the third electronic device and the first electronic device exchange the data of the second service through the second Wi-Fi connection. The third electronic device establishes a second Bluetooth connection to the second electronic device in response to the second operation. The third electronic device sends address information of the third electronic device to the second electronic device through the second Bluetooth connection. The second electronic device is configured to: when the second electronic device and the first electronic device exchange the data of the first service through the first Wi-Fi connection, receive the address information of the third electronic device that is sent by the third electronic device. The second electronic device establishes a third Wi-Fi connection to the third electronic device based on the address information of the third electronic device. The second electronic device exchanges data of a third service with the third electronic device through the third Wi-Fi connection. In this way, when the third electronic device and the first electronic device perform Wi-Fi transmission, the third electronic device may further establish a Wi-Fi connection to the second electronic device, and perform data exchange through the Wi-Fi connection. In this case, a multipoint-to-multipoint Wi-Fi transmission mode is implemented.

According to the first aspect or any of the implementations of the first aspect, the first electronic device is configured to send first Bluetooth request information to the third electronic device in response to the first operation, where the first Bluetooth request information indicates to establish the first Bluetooth connection to the third electronic device. The third electronic device is configured to receive the first Bluetooth request information. The third electronic device establishes the first Bluetooth connection to the first electronic device in response to the first Bluetooth request information. In this way, during Wi-Fi communication with one or more electronic devices, the electronic device in this embodiment of this application may listen to or actively discover another electronic device according to a Bluetooth protocol, and establish a Bluetooth connection to the another electronic device, to further establish a Wi-Fi connection.

According to the first aspect or any of the implementations of the first aspect, the third electronic device is configured to send second Bluetooth request information to the second electronic device in response to the second operation, where the second Bluetooth request information indicates to establish the second Bluetooth connection to the second electronic device. The second electronic device is configured to receive the second Bluetooth request information. The second electronic device establishes the first Bluetooth connection to the first electronic device in response to the second Bluetooth request information. In this way, during Wi-Fi communication with one or more electronic devices, the electronic device in this embodiment of this application may listen to or actively discover another electronic device according to a Bluetooth protocol, and establish a Bluetooth connection to the another electronic device, to further establish a Wi-Fi connection.

According to the first aspect or any of the implementations of the first aspect, a local forwarding table of the first electronic device includes a forwarding entry of the second electronic device and a forwarding entry of the third electronic device, where the forwarding entry of the second electronic device includes: address information of the second electronic device, Wi-Fi capability information of the second electronic device, and a first encryption key; and the forwarding entry of the third electronic device includes: address information of the third electronic device, Wi-Fi capability information of the third electronic device, and a second encryption key. In this case, a local forwarding table of the electronic device in this embodiment of this application may record forwarding entries corresponding to a plurality of electronic devices communicating with the electronic device. In other words, all the electronic devices in this embodiment of this application can implement a function of GO in the 802.11 protocol, to perform Wi-Fi communication with a plurality of electronic devices.

According to the first aspect or any of the implementations of the first aspect, the first electronic device is configured to send a first data packet to the second electronic device through the first Wi-Fi connection. The first data packet includes the service data of the first service and the address information of the second electronic device, and the first data packet is obtained by the first electronic device through encryption based on the first encryption key and modulation based on the Wi-Fi capability information of the second electronic device. In this case, a local forwarding table of the electronic device in this embodiment of this application may record forwarding entries corresponding to a plurality of electronic devices communicating with the electronic device. Correspondingly, the electronic device may perform Wi-Fi data exchange with the plurality of electronic devices based on the recorded forwarding entries of the plurality of electronic devices.

According to the first aspect or any of the implementations of the first aspect, the first electronic device is configured to send a second data packet to the third electronic device through the second Wi-Fi connection. The second data packet includes the service data of the second service and the address information of the third electronic device, and the second data packet is obtained by the first electronic device through encryption based on the second encryption key and modulation based on the Wi-Fi capability information of the third electronic device. In this case, a local forwarding table of the electronic device in this embodiment of this application may record forwarding entries corresponding to a plurality of electronic devices communicating with the electronic device. Correspondingly, the electronic device may perform Wi-Fi data exchange with the plurality of electronic devices based on the recorded forwarding entries of the plurality of electronic devices.

For example, the first service and the second service may be a same service, or may be different services.

According to the first aspect or any of the implementations of the first aspect, the first service is any one of the following services: a projection service, a sharing service, and a multi-screen collaboration service; and the second service is any one of the following services: a projection service, a sharing service, and a multi-screen collaboration service.

According to the first aspect or any of the implementations of the first aspect, the first electronic device is configured to receive a third operation; and send third Bluetooth request information to the second electronic device in response to the third operation, where the third Bluetooth request information indicates to establish a Bluetooth connection to the second electronic device. The second electronic device is configured to receive the third Bluetooth request information; and send third Bluetooth response information to the first electronic device, where the third Bluetooth response information indicates that the second electronic device is a preset device. The first electronic device is configured to receive the third Bluetooth response information; and establish a third Bluetooth connection to the second electronic device based on the third Bluetooth response information. In this way, the electronic device may determine, based on a Bluetooth protocol, whether a peer device is a preset device. After it is determined that the peer device is the preset device, communication with the peer device may be performed based on a communication protocol in this embodiment of this application.

According to the first aspect or any of the implementations of the first aspect, the first electronic device is configured to receive a fourth operation; and send fourth Bluetooth request information to the second electronic device in response to the fourth operation, where the fourth Bluetooth request information indicates to establish a Bluetooth connection to the second electronic device. The second electronic device is configured to receive the fourth Bluetooth request information; and send fourth Bluetooth response information to the first electronic device, where the fourth Bluetooth response information indicates that the second electronic device is a non-preset device. The first electronic device is configured to receive the fourth Bluetooth response information; and based on the fourth Bluetooth response information, establish the first Wi-Fi connection to the second electronic device according to the 802.11 protocol. In this way, the electronic device may determine, based on a Bluetooth protocol, whether a peer device is a preset device. After it is determined that the peer device is a non-preset device, communication with the peer device may be performed according to a procedure in a conventional protocol, for example, the 802.11 protocol.

According to the first aspect or any of the implementations of the first aspect, the first electronic device is configured to receive a fifth operation; send fifth Bluetooth request information to the second electronic device in response to the fifth operation, where the fifth Bluetooth request information indicates to establish a Bluetooth connection to the second electronic device; and establish the first Wi-Fi connection to the second electronic device according to the 802.11 protocol when the first electronic device does not receive, within preset duration, Bluetooth response information sent by the second electronic device. In this way, the electronic device may determine, based on a Bluetooth protocol, whether a peer device is a preset device. After it is determined that the peer device is a non-preset device, communication with the peer device may be performed according to a procedure in a conventional protocol, for example, the 802.11 protocol.

According to the first aspect or any of the implementations of the first aspect, the first electronic device is configured to send the address information of the first electronic device and channel information of the first electronic device to the third electronic device through the first Bluetooth connection. The third electronic device is configured to send first Wi-Fi connection request information to the first electronic device based on the address information of the first electronic device and the channel information of the first electronic device, where the first Wi-Fi connection request information indicates to establish the second Wi-Fi connection to the first electronic device, and the first Wi-Fi connection request information is information in a specific format. The first electronic device is configured to establish the second Wi-Fi connection to the third electronic device in response to the received first Wi-Fi connection request information. In this way, the electronic device in this embodiment of this application completes link negotiation by using a customized protocol, and GO/GC negotiation is not required. In this way, a problem that devices cannot communicate with each other due to role limitation can be avoided.

According to a second aspect, an embodiment of this application provides a communication method. The method includes: A first electronic device receives a first operation when the first electronic device and a second electronic device exchange data of a first service through a first Wi-Fi connection; the first electronic device establishes a first Bluetooth connection to a third electronic device in response to the first operation; the first electronic device sends address information of the first electronic device to the third electronic device through the first Bluetooth connection; the third electronic device receives the address information of the first electronic device that is sent by the first electronic device; the third electronic device establishes a second Wi-Fi connection to the first electronic device based on the address information of the first electronic device; and the third electronic device exchanges data of a second service with the first electronic device through the second Wi-Fi connection.

According to the second aspect, the method further includes: The third electronic device receives a second operation when the third electronic device and the first electronic device exchange the data of the second service through the second Wi-Fi connection; the third electronic device establishes a second Bluetooth connection to the second electronic device in response to the second operation; the third electronic device sends address information of the third electronic device to the second electronic device through the second Bluetooth connection; when the second electronic device and the first electronic device exchange the data of the first service through the first Wi-Fi connection, the second electronic device receives the address information of the third electronic device that is sent by the third electronic device; the second electronic device establishes a third Wi-Fi connection to the third electronic device based on the address information of the third electronic device; and the second electronic device exchanges data of a third service with the third electronic device through the third Wi-Fi connection.

According to the second aspect or any of the implementations of the second aspect, that the first electronic device establishes a first Bluetooth connection to a third electronic device in response to the first operation includes: The first electronic device sends first Bluetooth request information to the third electronic device in response to the first operation, where the first Bluetooth request information indicates to establish the first Bluetooth connection to the third electronic device; the third electronic device receives the first Bluetooth request information; and the third electronic device establishes the first Bluetooth connection to the first electronic device in response to the first Bluetooth request information.

According to the second aspect or any of the implementations of the second aspect, that the third electronic device establishes a second Bluetooth connection to the second electronic device in response to the second operation includes: The third electronic device sends second Bluetooth request information to the second electronic device in response to the second operation, where the second Bluetooth request information indicates to establish the second Bluetooth connection to the second electronic device; the second electronic device receives the second Bluetooth request information; and the second electronic device establishes the first Bluetooth connection to the first electronic device in response to the second Bluetooth request information.

According to the second aspect or any of the implementations of the second aspect, a local forwarding table of the first electronic device includes a forwarding entry of the second electronic device and a forwarding entry of the third electronic device, where the forwarding entry of the second electronic device includes: address information of the second electronic device, Wi-Fi capability information of the second electronic device, and a first encryption key; and the forwarding entry of the third electronic device includes: address information of the third electronic device, Wi-Fi capability information of the third electronic device, and a second encryption key.

According to the second aspect or any of the implementations of the second aspect, the method further includes: The first electronic device sends a first data packet to the second electronic device through the first Wi-Fi connection, where the first data packet includes the service data of the first service and the address information of the second electronic device, and the first data packet is obtained by the first electronic device through encryption based on the first encryption key and modulation based on the Wi-Fi capability information of the second electronic device.

According to the second aspect or any of the implementations of the second aspect, the method further includes: The first electronic device sends a second data packet to the third electronic device through the second Wi-Fi connection, where the second data packet includes the service data of the second service and the address information of the third electronic device, and the second data packet is obtained by the first electronic device through encryption based on the second encryption key and modulation based on the Wi-Fi capability information of the third electronic device.

According to the second aspect or any of the implementations of the second aspect, the first service is any one of the following services: a projection service, a sharing service, and a multi-screen collaboration service; and the second service is any one of the following services: a projection service, a sharing service, and a multi-screen collaboration service.

According to the second aspect or any of the implementations of the second aspect, before the first electronic device and the second electronic device exchange the data of the first service through the first Wi-Fi connection, the method further includes: The first electronic device receives a third operation; the first electronic device sends third Bluetooth request information to the second electronic device in response to the third operation, where the third Bluetooth request information indicates to establish a Bluetooth connection to the second electronic device; the second electronic device receives the third Bluetooth request information; the second electronic device sends third Bluetooth response information to the first electronic device, where the third Bluetooth response information indicates that the second electronic device is a preset device; the first electronic device receives the third Bluetooth response information; and the first electronic device establishes a third Bluetooth connection to the second electronic device based on the third Bluetooth response information.

According to the second aspect or any of the implementations of the second aspect, before the first electronic device and the second electronic device exchange the data of the first service through the first Wi-Fi connection, the method further includes: The first electronic device receives a fourth operation; the first electronic device sends fourth Bluetooth request information to the second electronic device in response to the fourth operation, where the fourth Bluetooth request information indicates to establish a Bluetooth connection to the second electronic device; the second electronic device receives the fourth Bluetooth request information; the second electronic device sends fourth Bluetooth response information to the first electronic device, where the fourth Bluetooth response information indicates that the second electronic device is a non-preset device; the first electronic device receives the fourth Bluetooth response information; and based on the fourth Bluetooth response information, the first electronic device establishes the first Wi-Fi connection to the second electronic device according to the 802.11 protocol.

According to the second aspect or any of the implementations of the second aspect, before the first electronic device and the second electronic device exchange the data of the first service through the first Wi-Fi connection, the method further includes: The first electronic device receives a fifth operation; the first electronic device sends fifth Bluetooth request information to the second electronic device in response to the fifth operation, where the fifth Bluetooth request information indicates to establish a Bluetooth connection to the second electronic device; and the first electronic device establishes the first Wi-Fi connection to the second electronic device according to the 802.11 protocol when the first electronic device does not receive, within preset duration, Bluetooth response information sent by the second electronic device.

According to the second aspect or any of the implementations of the second aspect, before the first electronic device and the second electronic device exchange the data of the first service through the first Wi-Fi connection, the method further includes: The first electronic device sends the address information of the first electronic device and channel information of the first electronic device to the third electronic device through the first Bluetooth connection; the third electronic device sends first Wi-Fi connection request information to the first electronic device based on the address information of the first electronic device and the channel information of the first electronic device, where the first Wi-Fi connection request information indicates to establish the second Wi-Fi connection to the first electronic device, and the first Wi-Fi connection request information is information in a specific format; and the first electronic device establishes the second Wi-Fi connection to the third electronic device in response to the received first Wi-Fi connection request information.

The second aspect and any of the implementations of the second aspect respectively correspond to the first aspect and any of the implementations of the first aspect. For technical effects corresponding to the second aspect and any of the implementations of the second aspect, refer to the technical effects corresponding to the first aspect and any of the implementations of the first aspect. Details are not described herein again.

According to a third aspect, an embodiment of this application provides a communication method. The method includes: When a first electronic device and a second electronic device exchange data of a first service through a first Wi-Fi connection, the first electronic device receives a first operation; the first electronic device establishes a first Bluetooth connection to a third electronic device in response to the first operation; the first electronic device sends address information of the first electronic device to the third electronic device through the first Bluetooth connection, and receives address information of the third electronic device that is sent by the third electronic device through the Bluetooth connection; the first electronic device establishes a second Wi-Fi connection to the third electronic device based on the address information of the third electronic device; and the first electronic device exchanges data of a second service with the third electronic device through the second Wi-Fi connection.

The third aspect and any implementation of the third aspect respectively correspond to the first aspect and any implementation of the first aspect. For technical effects corresponding to the third aspect and any implementation of the third aspect, refer to the technical effects corresponding to the first aspect and any implementation of the first aspect. Details are not described herein again.

According to a fourth aspect, an embodiment of this application provides an electronic device. The electronic device includes a memory and a processor. The memory is coupled to the processor. The memory stores program instructions. When the program instructions are executed by the processor, the electronic device is enabled to perform the communication method performed by the first electronic device, the second electronic device, or the third electronic device in any one of the second aspect or the possible implementations of the second aspect.

The fourth aspect and any implementation of the fourth aspect respectively correspond to the first aspect and any implementation of the first aspect. For technical effects corresponding to the fourth aspect and any implementation of the fourth aspect, refer to the technical effects corresponding to the first aspect and any implementation of the first aspect. Details are not described herein again.

According to a fifth aspect, an embodiment of this application provides a chip. The chip includes one or more interface circuits and one or more processors. The interface circuit is configured to receive a signal from a memory of an electronic device, and send a signal to the processor, where the signal includes computer instructions stored in the memory. When the processor executes the computer instructions, the electronic device is enabled to perform the communication method performed by the first electronic device, the second electronic device, or the third electronic device in any one of the second aspect or the possible implementations of the second aspect.

The fifth aspect and any implementation of the fifth aspect respectively correspond to the first aspect and any implementation of the first aspect. For technical effects corresponding to the fifth aspect and any implementation of the fifth aspect, refer to the technical effects corresponding to the first aspect and any implementation of the first aspect. Details are not described herein again.

According to a sixth aspect, an embodiment of this application provides a computer-readable medium, configured to store a computer program. The computer program includes instructions used to perform the method according to any one of the second aspect or the possible implementations of the second aspect.

The sixth aspect and any implementation of the sixth aspect respectively correspond to the first aspect and any implementation of the first aspect. For technical effects corresponding to the sixth aspect and any implementation of the sixth aspect, refer to the technical effects corresponding to the first aspect and any implementation of the first aspect. Details are not described herein again.

According to a seventh aspect, an embodiment of this application provides a computer program. The computer program includes instructions for performing the method according to any one of the second aspect or the possible implementations of the second aspect.

The seventh aspect and any implementation of the seventh aspect respectively correspond to the first aspect and any implementation of the first aspect. For technical effects corresponding to the seventh aspect and any implementation of the seventh aspect, refer to the technical effects corresponding to the first aspect and any implementation of the first aspect. Details are not described herein again.

### BRIEF DESCRIPTION OF DRAWINGS

FIG. 1a is a schematic diagram of an example of a structure of an electronic device;
FIG. 1b is a schematic diagram of an example of a software structure of an electronic device;
FIG. 2A and FIG. 2B are a schematic diagram of an example of a communication procedure of the 802.11 protocol;
FIG. 3 is a schematic diagram of an example of an application scenario;
FIG. 4A and FIG. 4B are schematic diagrams of examples of user interfaces;
FIG. 5A and FIG. 5B are schematic diagrams of examples of user interfaces;
FIG. 6a is a schematic flowchart of an example of Bluetooth communication between a tablet and a mobile phone A;
FIG. 6b-1 and FIG. 6b-2 are a schematic flowchart of an example of communication between a tablet, a mobile phone A, and a mobile phone B;

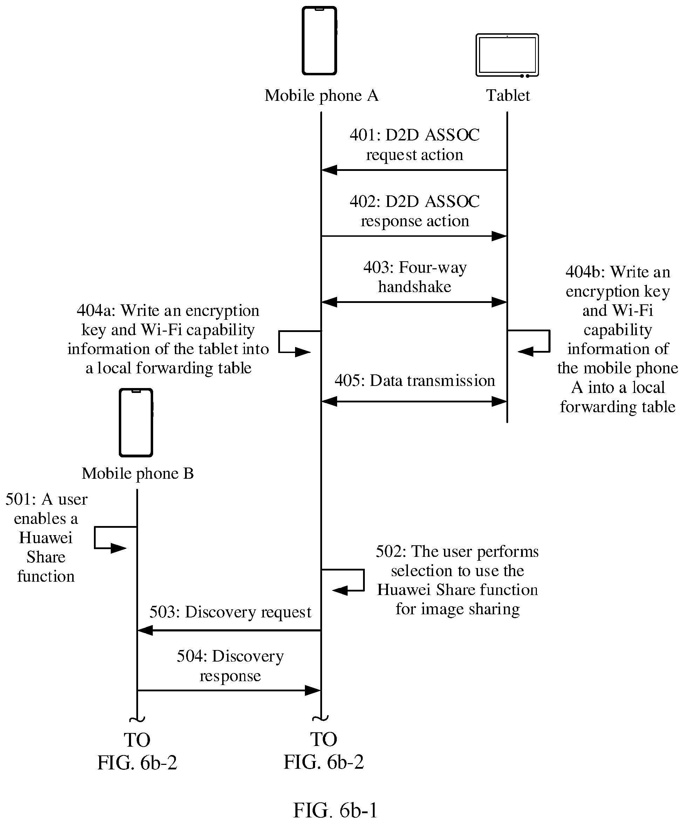

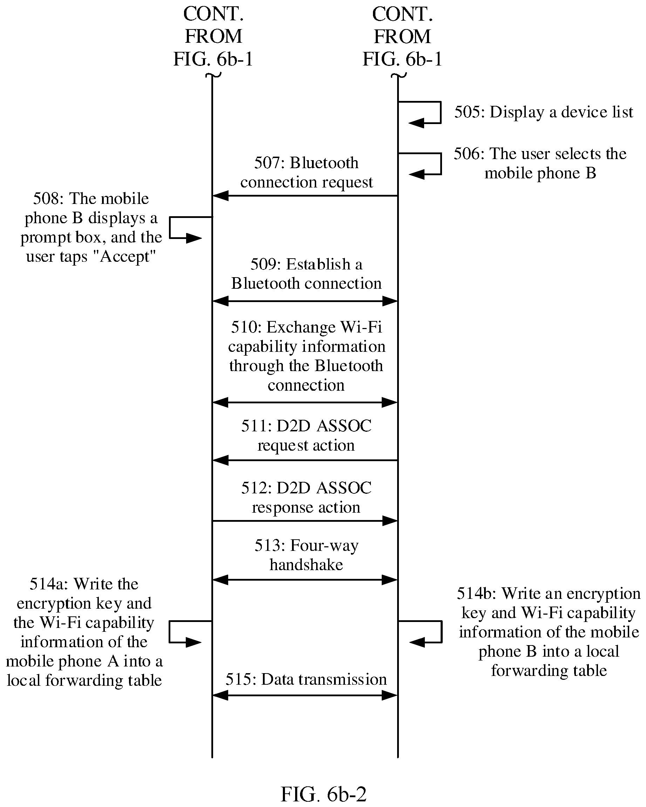

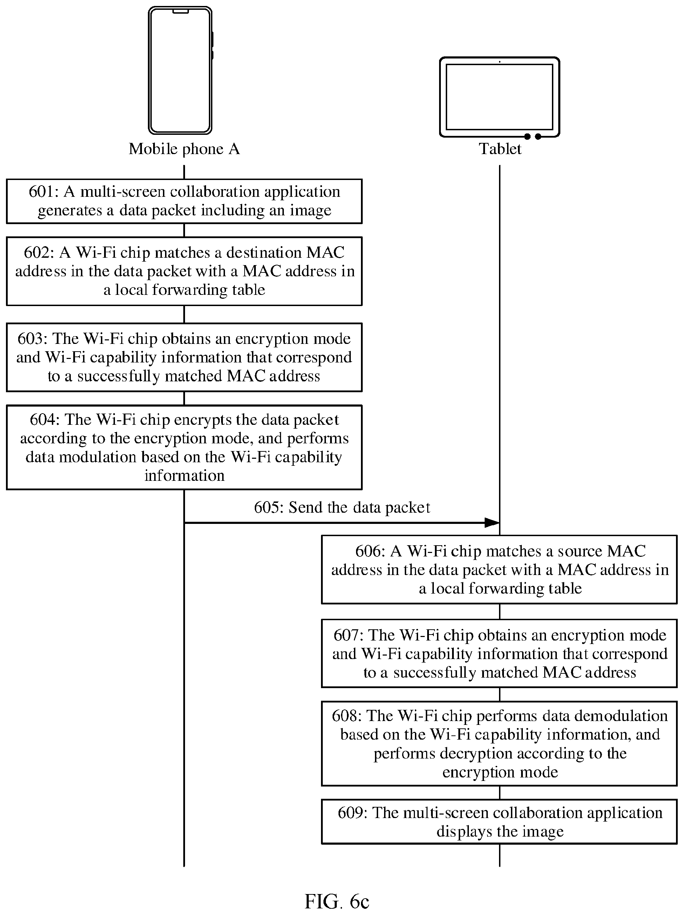

FIG. 6c is a schematic flowchart of an example of data transmission between a tablet and a mobile phone A;

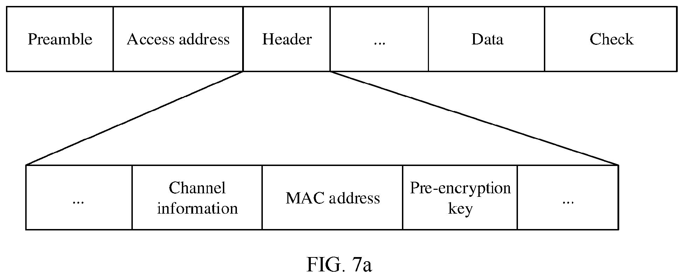

FIG. 7a is a schematic diagram of an example of a Bluetooth information format;

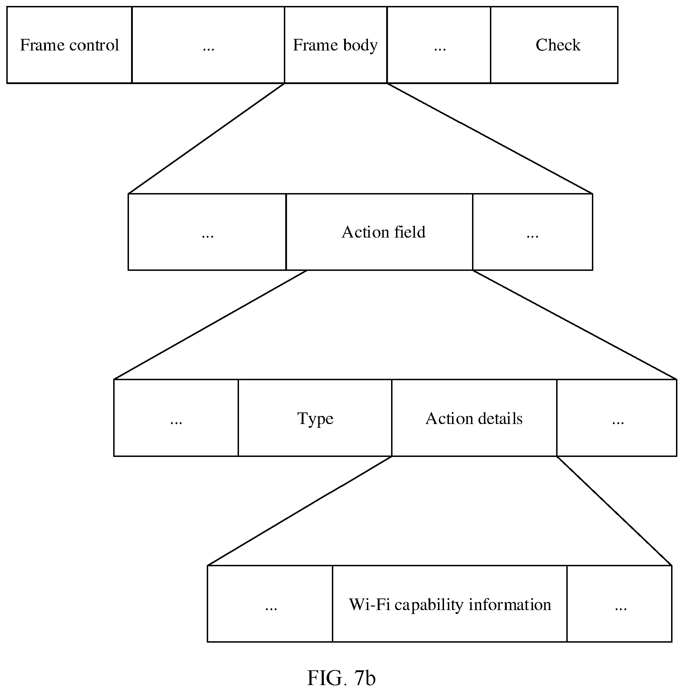

FIG. 7b is a schematic diagram of an example of a Wi-Fi information format;

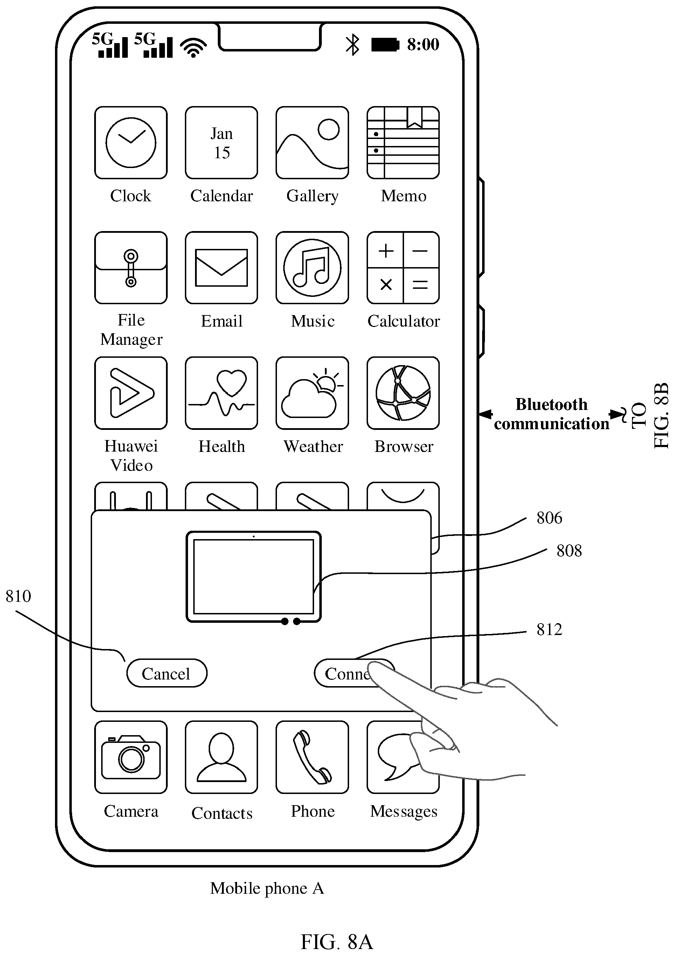

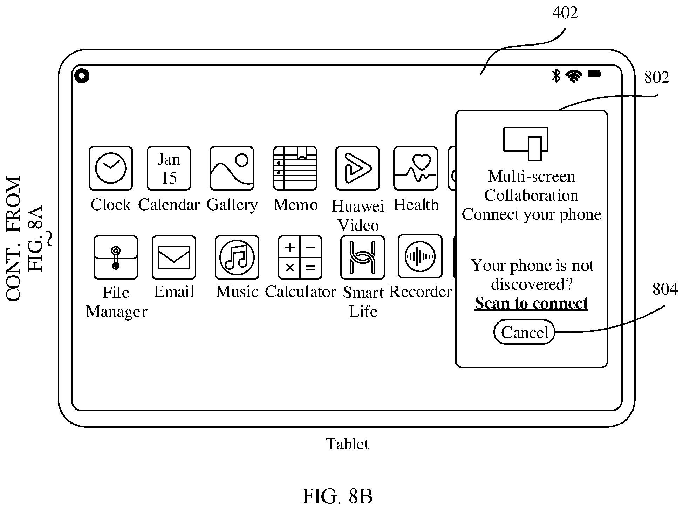

FIG. 8A and FIG. 8B are schematic diagrams of examples of user interfaces;

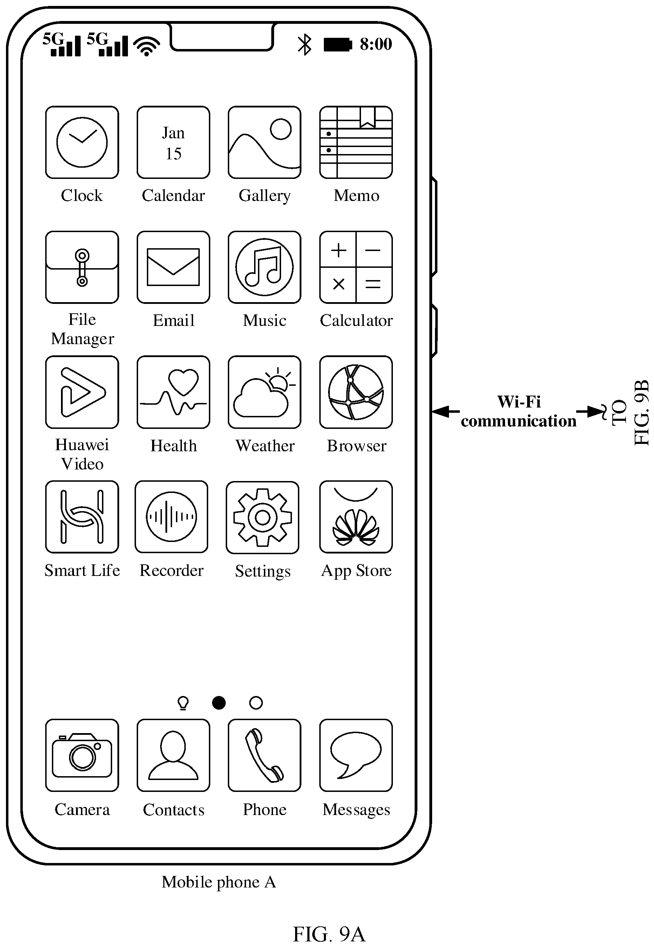

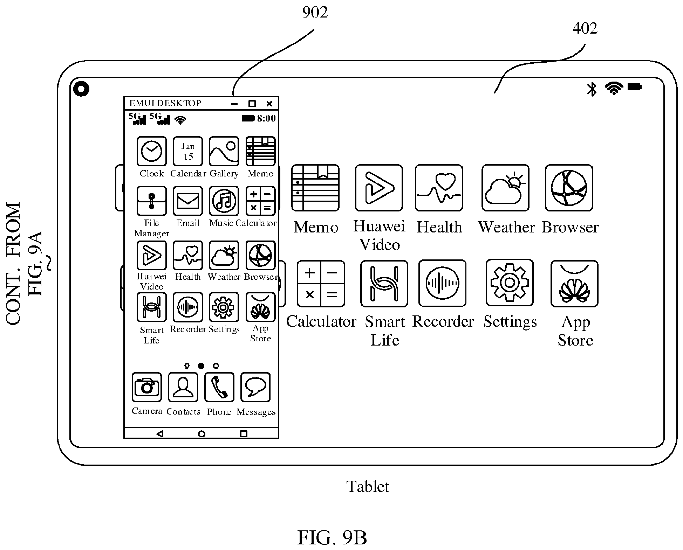

FIG. 9A and FIG. 9B are schematic diagrams of examples of user interfaces;

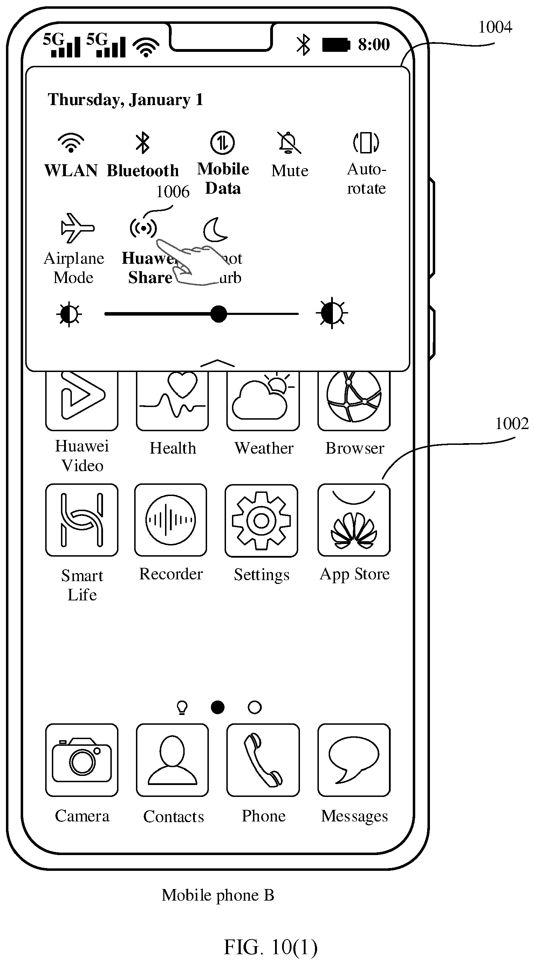

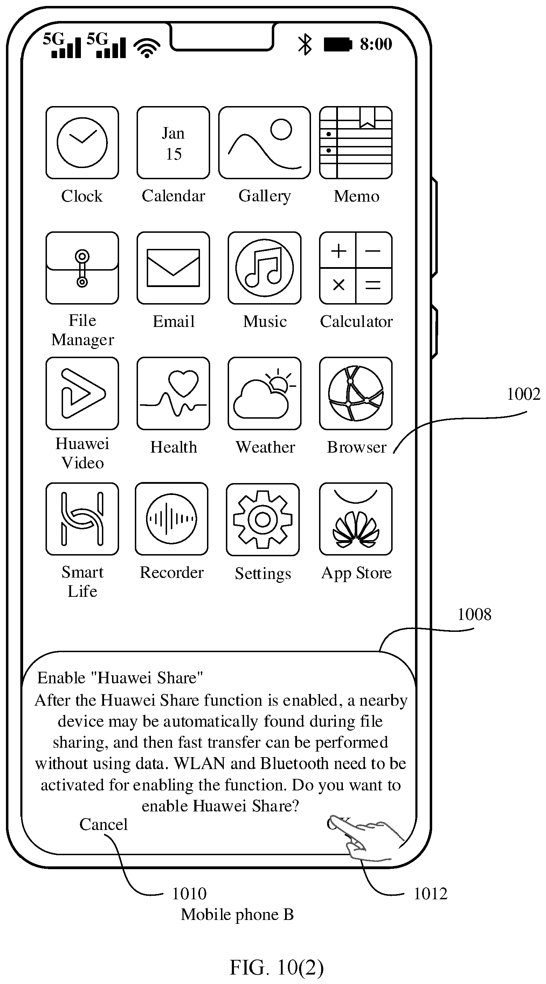

FIG. 10(1) and FIG. 10(2) are schematic diagrams of examples of user interfaces;

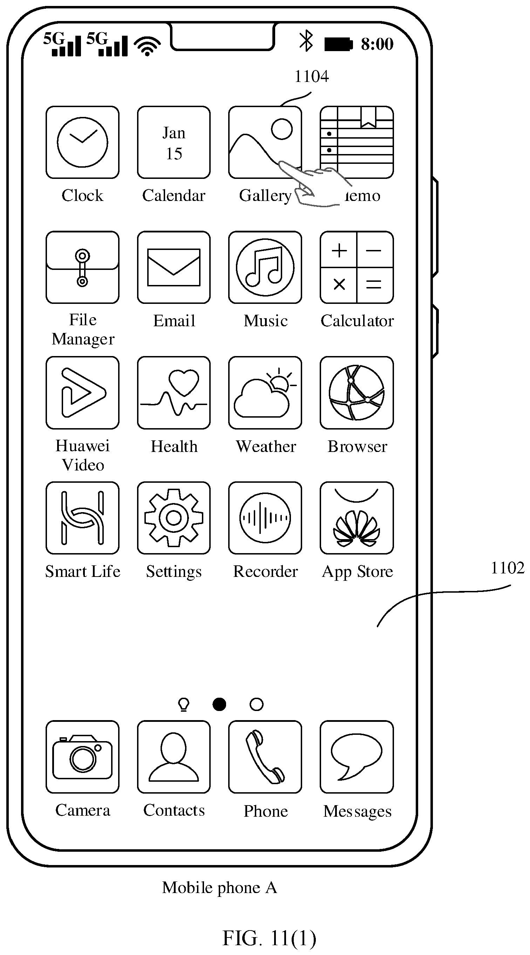

FIG. 11(1) to FIG. 11(4) are schematic diagrams of examples of user interfaces;

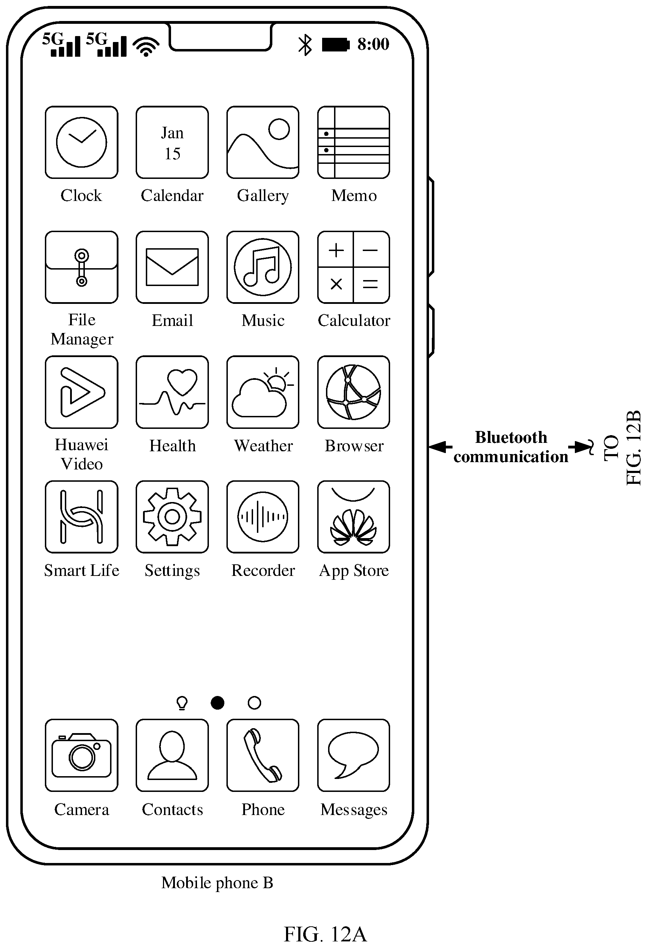

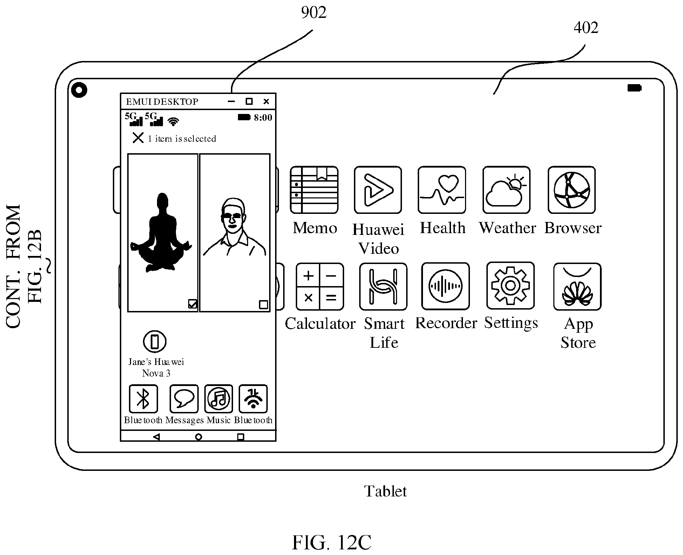

FIG. 12A to FIG. 12C are schematic diagrams of examples of user interfaces;

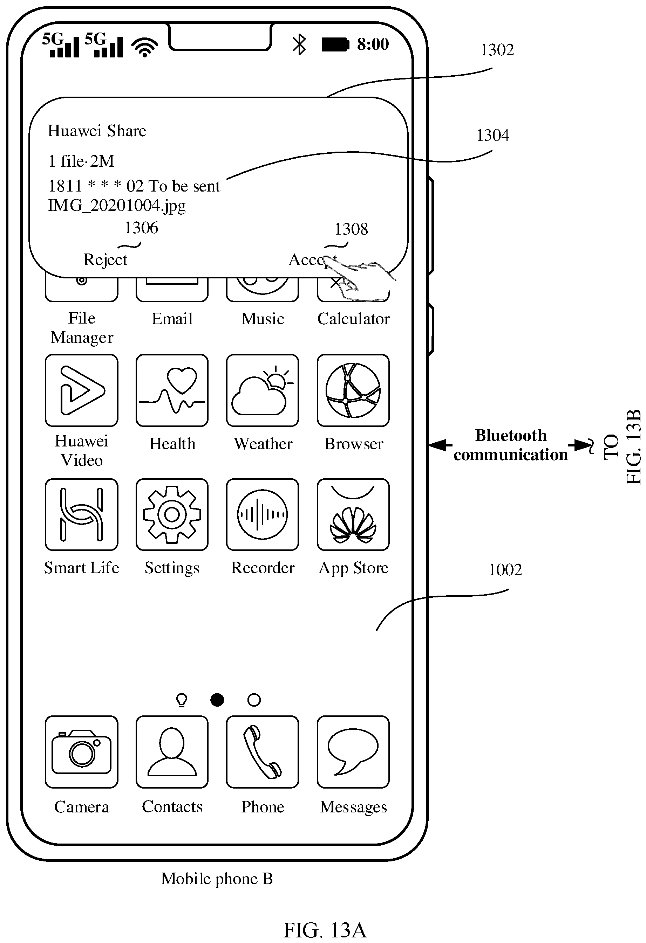

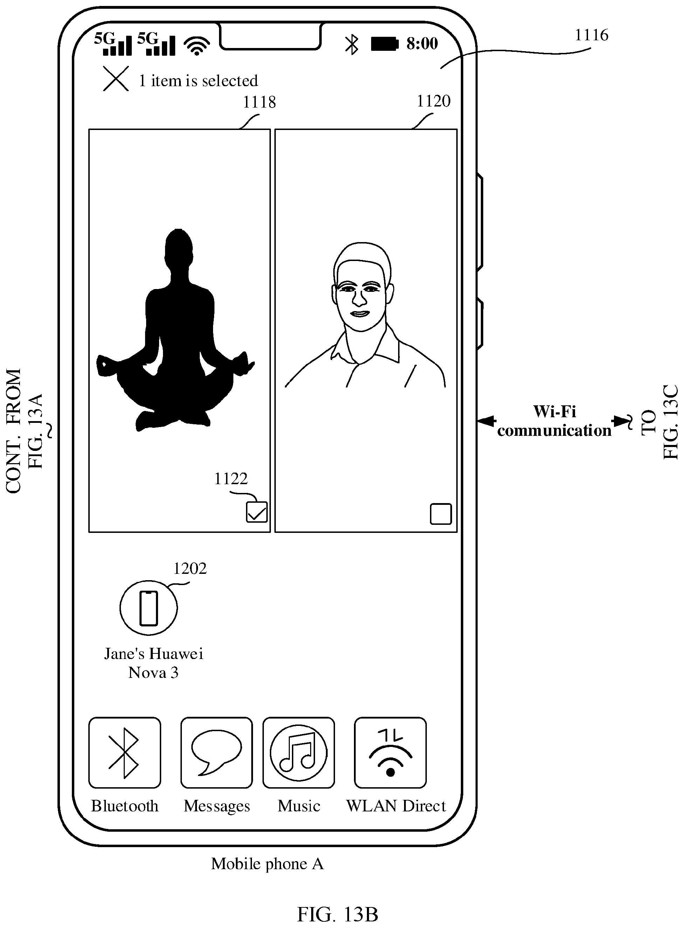

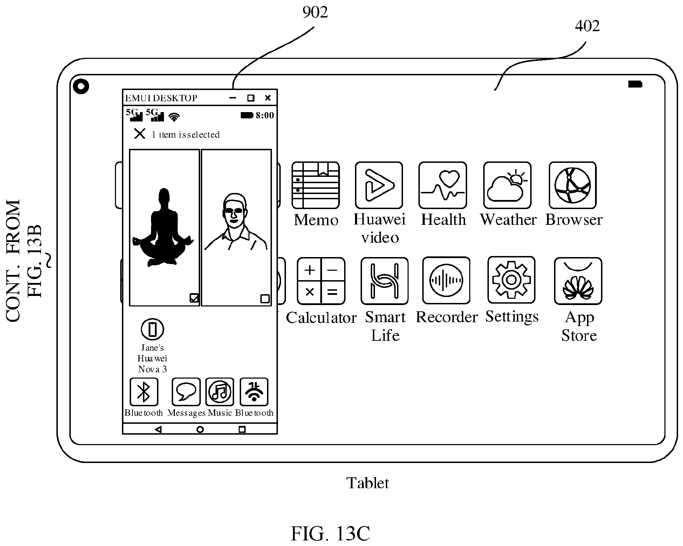

FIG. 13A to FIG. 13C are schematic diagrams of examples of user interfaces;

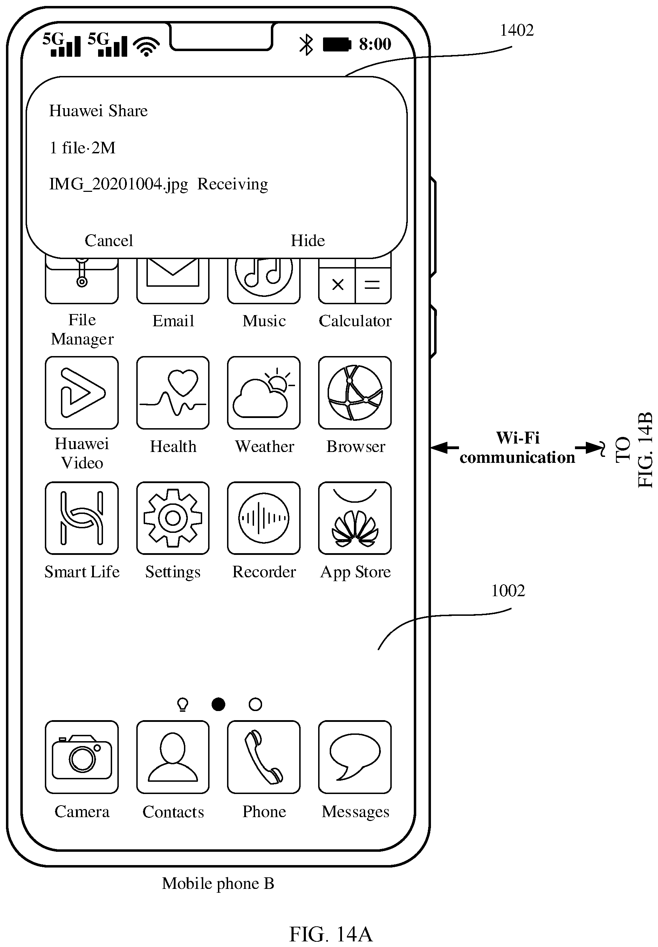

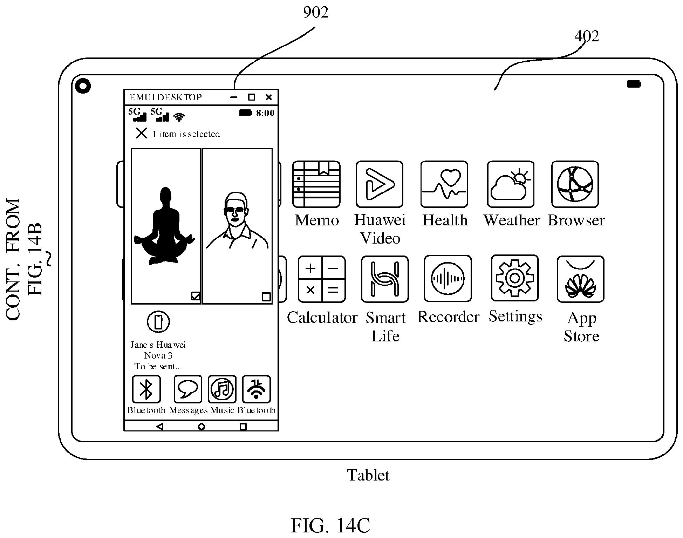

FIG. 14A to FIG. 14C are schematic diagrams of examples of user interfaces;
FIG. 15a-1 to FIG. 15a-3 are schematic diagrams of examples of user interfaces;

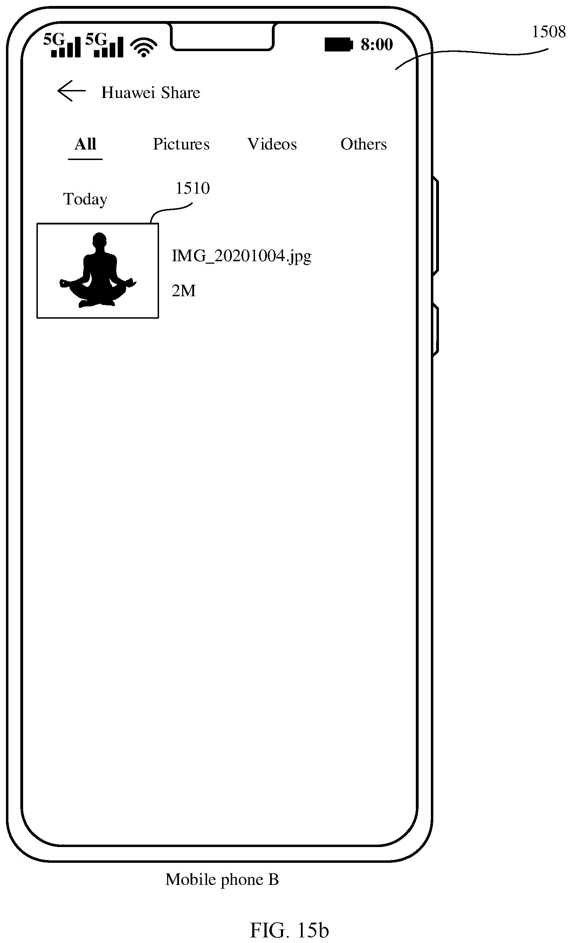

FIG. 15b is a schematic diagram of an example of a user interface; and

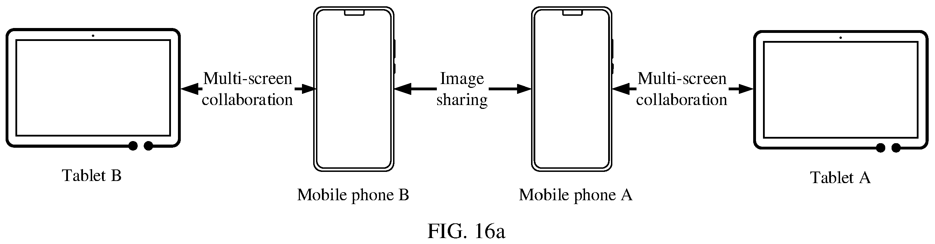

FIG. 16a to FIG. 16c are schematic diagrams of examples of an application scenario.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship between associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first target object, a second target object, and the like are used to distinguish between different target objects, but are not used to describe a particular order of the target objects.

In embodiments of this application, the words "example", "for example", and the like are used to give an example, an illustration, or a description. Any embodiment or design scheme described as an "example" or "for example" in embodiments of this application should not be explained as being more preferred or having more advantages than another embodiment or design scheme. Specifically, use of "example" or "for example" is intended to present a related concept in a specific manner.

In the descriptions of embodiments of this application, unless otherwise stated, "a plurality of" means two or more than two. For example, a plurality of processing units mean two or more processing units, and a plurality of systems refer to two or more systems.

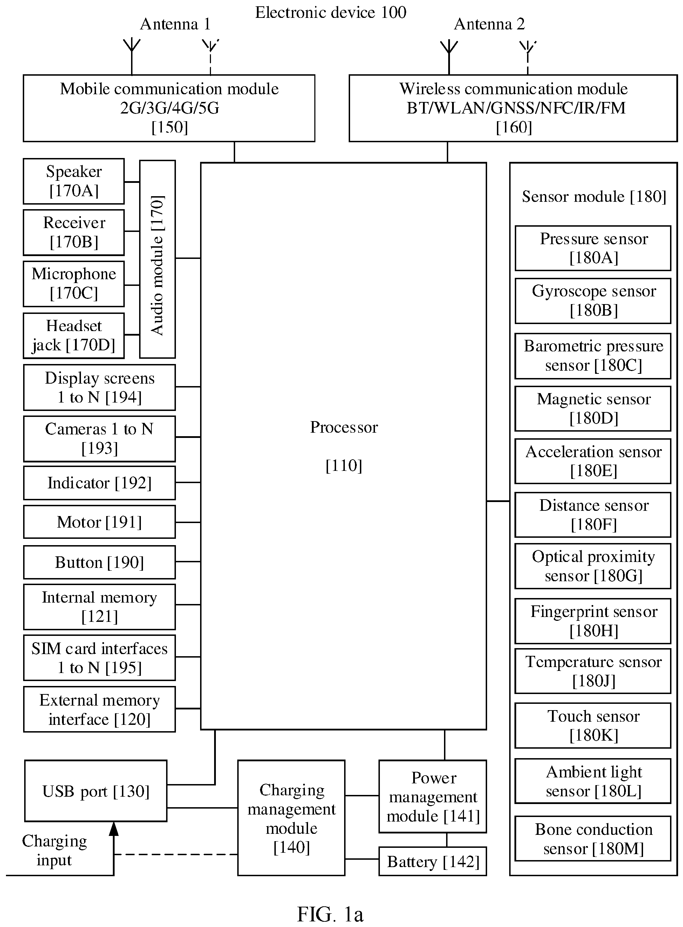

FIG. 1a is a schematic diagram of a structure of an electronic device 100. It should be understood that the electronic device 100 shown in FIG. 1a is merely an electronic device example. The electronic device 100 may include more or fewer components than those shown in the figure, or two or more components may be combined, or a different component configuration may be used. The components shown in FIG. 1a may be implemented in hardware, software, or a combination of hardware and software that includes one or more signal processing and/or application-specific integrated circuits.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to control instruction obtaining and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instruction or the data again, the processor may directly invoke the instruction or the data from the memory. In this way, repeated access is avoided, and waiting time of the processor 110 is reduced. Therefore, system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The USB port 130 is a port that conforms to a USB standard specification, and may be specifically a mini USB port, a micro USB port, a USB Type-C port, or the like. The USB port 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive charging input from the charger. The charger may be a wireless charger or a wired charger. In some embodiments of wired charging, the charging management module 140 may receive charging input of a wired charger through the USB port 130. In some embodiments of wireless charging, the charging management module 140 may receive wireless charging input through a wireless charging coil of the electronic device 100. The charging management module 140 supplies power to the electronic device through the power management module 141 while charging the battery 142.

The power management module 141 is configured to connect the battery 142, the charging management module 140, and the processor 110. The power management module 141 receives input of the battery 142 and/or the charging management module 140, to supply power to the processor 110, the internal memory 121, an external memory, the display screen 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may be alternatively disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used with a tuning switch.

The mobile communication module 150 may provide a solution that is for wireless communication including 2G, 3G, 4G, 5G, or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low-frequency baseband signal into a medium-frequency or high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by using the display screen 194. In some embodiments, the modem processor may be an independent component. In some other embodiments, the modem processor may be independent of the processor 110, and the modem processor and the mobile communication module 150 or another functional module may be disposed in a same device.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components that integrate at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include technologies such as a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, and/or IR. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display screen 194, the application processor, and the like. The GPU is a microprocessor for image processing, and is connected to the display screen 194 and the application processor. The GPU is configured to perform mathematical and geometric computation, and render an image. The processor 110 may include one or more GPUs, which execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N display screens 194, where N is a positive integer greater than 1.

The electronic device 100 may implement a photographing function by using the ISP, the camera 193, the video codec, the GPU, the display screen 194, the application processor, and the like.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The external memory interface 120 may be used to connect to an external storage card, for example, a micro SD card, to extend storage of the electronic device 100. The external memory card communicates with the processor 110 through the external memory interface 120, to implement a data storage function. For example, files such as music and a video are stored in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

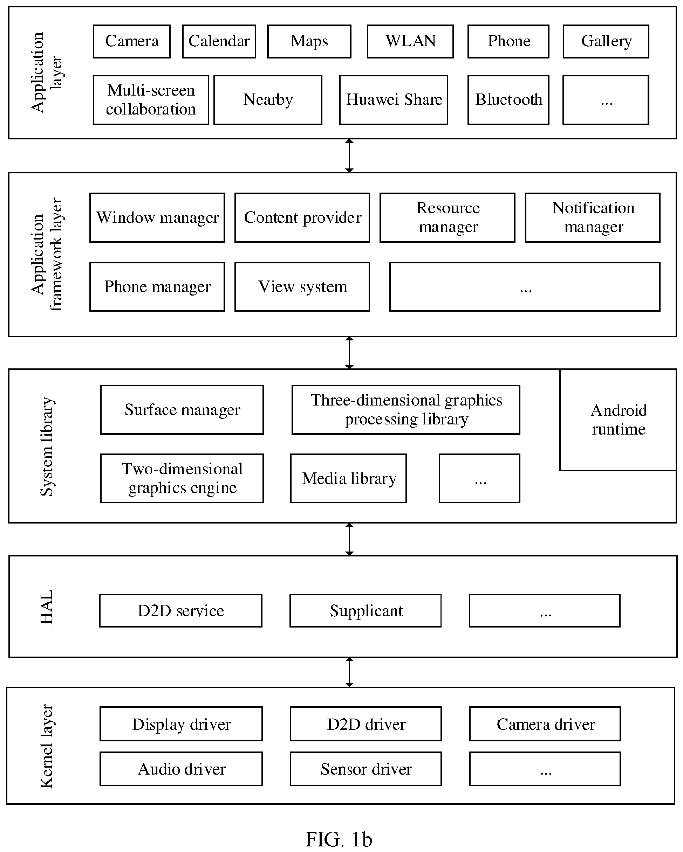

FIG. 1b is a block diagram of a software structure of the electronic device 100 according to an embodiment of this application.

In the layered architecture of the electronic device 100, software is divided into several layers, and each layer has a clear role and task. The layers communicate with each other through a software interface. In some embodiments, the Android system is divided into four layers: an application layer, an application framework layer, an Android runtime (Android runtime) and system library layer, and a kernel layer from top to bottom.

The application layer may include a series of application packages.

As shown in FIG. 1b, the application packages may include applications such as Camera, Gallery, Calendar, Phone, Navigation, WLAN, Bluetooth, Music, Videos, Huawei Share, Wireless Projection, and Nearby (Nearby).

The application framework layer provides an application programming interface (application programming interface, API) and a programming framework for an application at the application layer. The application framework layer includes some predefined functions.

As shown in FIG. 1b, the application framework layer may include a window manager, a content provider, a view system, a phone manager, a resource manager, a notification manager, and the like.

The window manager is configured to manage a window program. The window manager may obtain a size of a display screen, determine whether there is a status bar, perform screen locking, take a screenshot, and the like.

The content provider is configured to store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification control may include a view displaying a text and a view displaying an image.

The phone manager is configured to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be used to convey a message of a notification type. The message may automatically disappear after a short stay without user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or an indicator light blinks.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer run in the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The hardware abstraction layer (Hardware Abstraction Layer, HAL) is a layer between hardware and software. The HAL includes a D2D (Device to Device, device to device) service, supplicant (an authentication service), and the like. Optionally, the D2D service may also be referred to as a Wi-Fi direct service, and is used to manage and maintain a communication link between devices. The supplicant manages a D2D interface, a Wi-Fi interface, and key agreement function. The HAL is a foundation of an Android^{®}TM system. Function implementation of the Android^{®}TM system is implemented through the HAL.

The kernel layer is a layer between hardware and software. The kernel layer includes at least a display driver, a camera driver, an audio driver, a sensor driver, and a D2D driver.

It may be understood that components or modules included in the system framework layer, the system library and runtime layer, the HAL layer, and the kernel layer that are shown in FIG. 1b do not constitute a specific limitation on the electronic device 100. In some other embodiments of this application, the electronic device 100 may include more or fewer components than those shown in the figure, or some components may be combined, or some components may be split, or different component arrangements may be used.

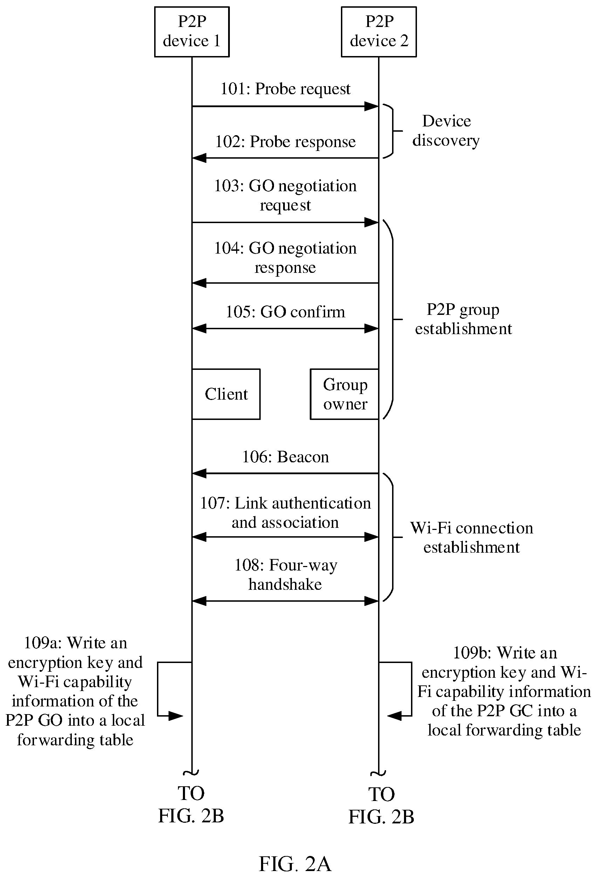

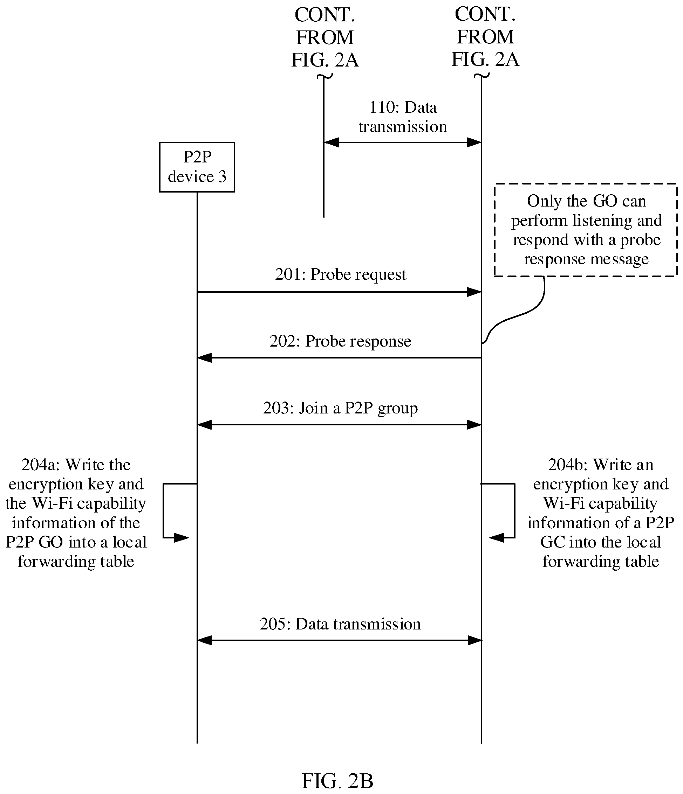

Currently, data exchange between different devices is usually implemented based on a P2P (peer-to-peer, peer-to-peer) protocol in the 802.11 protocol. Specifically, the P2P protocol provides a distributed network, so that devices in the P2P network can share data through a P2P connection. With development of a P2P technology, the P2P technology can provide a feasible inter-device data transmission manner for applications on electronic devices. For example, an electronic device on which an application supporting the P2P technology is installed, such as a Huawei Share application, a projection application, or a multi-screen collaboration application, can establish a P2P connection to other electronic devices on which these applications are also installed to transmit related service data. The following briefly describes a P2P communication procedure in the 802.11 protocol with reference to a communication flowchart shown as an example in FIG. 2A and FIG. 2B. As shown in FIG. 2A and FIG. 2B, the procedure specifically includes the following steps.

S101: A P2P device 1 sends a probe request (probe request) message to a P2P device 2.

For example, the P2P device 1 broadcasts the probe request message. The P2P device 1 broadcasts the probe request message on an available channel (for example, a channel 1 to a channel 13) on a 2.4 GHz frequency band and all available channels (for example, a channel 36 to a channel 165) on a 5 GHz frequency band, to probe a device operating on a corresponding channel.

For example, the P2P device 2 works on a channel 40 of the 5 GH frequency band. For example, the P2P device 2 may receive a probe request message broadcast by the P2P device 1 on the channel 40 of the 5 GHz frequency band.

S102: The P2P device 2 sends a probe response (probe response) message to the P2P device 1.

For example, the P2P device 2 receives the probe request message sent by the P2P device 1, and sends the probe response message to the P2P device on the channel 40.

S103: The P2P device 1 sends a GO negotiation request (GO negotiation request) message to the P2P device 2.

For example, after discovering the nearby P2P device 2 supporting a P2P function, the P2P device 1 may establish a P2P group with the P2P device 2, and negotiation is performed to determine a GO (Group Owner, group owner) and a client (a member, which may also be referred to as a group member).

For example, a function of the GO is similar to that of an access point AP (Access Point) in a basic service set BSS (Basic Service Set), which may also be referred to as a base station. A function of the client is similar to that of a station (Station, STA) in the BSS. The station may support a plurality of wireless local area network (wireless local area network, WLAN) standards of the 802.11 family, for example, 802.11be, 802.11ax, 802.11ac, 802.11n, 802.11g, 802.11b, and 802.11a. The access point may be a device supporting the plurality of WLAN standards of the 802.11 family such as 802.11be, 802.11ax, 802.11ac, 802.11n, 802.11g, 802.11b, and 802.11a.

For example, in response to the received probe response message from the P2P device 2, the P2P device 1 sends a GO negotiation request message to the P2P device 2 on the channel 40, to perform role negotiation in the P2P group with the P2P device 2.

S104: The P2P device 2 sends a GO negotiation response (GO negotiation response) message to the P2P device 1.

For example, the P2P device 2 sends the GO negotiation response message to the P2P device 1 on the channel 40 in response to receiving the GO negotiation request message from the P2P device 1.

S105: The P2P device 1 sends a GO confirm (GO confirm) message to the P2P device 2.

It should be noted that the three frame exchanges in S103 to S105 are used to exchange information, so as to determine the GO and the client. The information exchanged in the three frame exchanges includes but is not limited to a MAC address of the GO, a Group ID, and the like. For a specific negotiation process, refer to the detailed descriptions of the 802.11 protocol. Details are not described herein again.

In the descriptions of this embodiment of this application, an example in which the P2P device 2 is the GO and the P2P device 1 is the client is used for description. For example, the P2P device 2 records that the P2P device 2 is the GO, and the P2P device 1 records that the P2P device 1 is the GC.

S106: The P2P device 2 sends a beacon (beacon) message to the P2P device 1.

For example, after group establishment between the P2P device 2 and the P2P device 1 is completed, the P2P device 2, as a GO device, may send the beacon message (broadcast message) (which may also be referred to as a beacon frame), to establish a Wi-Fi connection to another device on the 5 GHz frequency band, which may be referred to as a P2P connection.

S107: The P2P device 1 and the P2P device 2 perform link authentication and association.

For example, after detecting, through listening on the channel 40, the beacon message sent by the P2P device 2, the P2P device 1 performs a link authentication and association procedure with the P2P device 2, where a plurality of frame exchanges are required in the link authentication and association procedure, to exchange information needed for Wi-Fi connection establishment. For example, the information required for Wi-Fi connection establishment includes a pre-encryption key and Wi-Fi capability information. The Wi-Fi capability information includes but is not limited to MAC address information, a supported channel set, a modulation scheme, and the like. The specific concepts are described in detail below.

S108: The P2P device 1 and the P2P device 2 perform four-way handshake (4-way handshake).

For example, after four-way handshake is performed between the P2P device 1 and the P2P device 2, a Wi-Fi connection is successfully established on the channel 40. That is, the P2P device 1 and the P2P device 2 can exchange data through the Wi-Fi connection.

For example, in a four-way handshake process, the P2P device 1 and the P2P device 2 may negotiate an encryption key used for data transmission.

It should be noted that the procedure of P2P connection establishment in FIG. 2A and FIG. 2B is merely an example, and a procedure of Wi-Fi communication between the P2P device 1 and the P2P device 2 may include more frame exchange procedures than that in FIG. 2A and FIG. 2B. For information carried in each frame and a format and a function of each frame, refer to descriptions in an existing standard. Details are not described again in this application.

S109a: The P2P device 1 writes an encryption key and Wi-Fi capability information of the P2P GO (that is, the P2P device 2) into a local forwarding table.

S109b: The P2P device 2 writes an encryption key and Wi-Fi capability information of the P2P GC (that is, the P2P device 1) into a local forwarding table.

For example, as the GC in the P2P group, the P2P device 1 correspondingly writes the Wi-Fi capability information of the GO (that is, the P2P device 2) in the P2P group and the encryption key obtained in S108 into the local forwarding table.

As the GO in the P2P group, the P2P device 2 correspondingly writes the Wi-Fi capability information of the GC (that is, the P2P device 1) in the P2P group and the encryption key obtained in S108 into the local forwarding table.

S110: The P2P device 1 and the P2P device 2 transmit data.

For example, the P2P device 1 and the P2P device 2 may exchange data through the established Wi-Fi connection (that is, a P2P connection).

Specifically, the P2P device 1 is used as an example. The P2P device 1 may encrypt a data packet based on the encryption key that is recorded in the local forwarding table and that is corresponding to the P2P device 2, perform data modulation on the data packet based on the Wi-Fi capability information of the P2P device 2, and send the data packet to the P2P device 2 through the Wi-Fi connection. A data sending process of the P2P device 2 is similar to that of the P2P device 1, and details are not described herein again.

Still refer to FIG. 2A and FIG. 2B. For example, as the GO in the P2P group, the P2P device 2 may invite another P2P device to join the P2P group to which the P2P device 2 belongs. An example in which the P2P device 2 invites a P2P device 3 to join the P2P group is used for description, which specifically includes the following steps.

S201: The P2P device 3 sends a probe request message to the P2P device 2.

For example, the P2P device 3 broadcasts the probe request message on all frequency bands, to discover the P2P device 2. For specific details, refer to S101. The details are not described herein again.

S202: The P2P device 2 sends a probe response message to the P2P device 3.

For example, after receiving the probe request message sent by the P2P device 3, the P2P device 2 sends the probe response message to the P2P device 3.

It should be noted that, in the P2P group, the P2P device 2 serves as the GO, and has a function of listening and replying to a probe response message. In other words, only when another device that is to join the group sends a probe request message, and the P2P device 2 receives the probe request message sent by the another device, the P2P device 2 invites the another device to join the P2P group. It should be noted that the GC in the P2P group does not have a listening function, that is, the GC does not receive the probe request message sent by the P2P device 3.

S203: The P2P device 3 joins the P2P group to which the P2P device 2 belongs.

S204a: The P2P device 3 writes the encryption key and the Wi-Fi capability information of the P2P GO (that is, the P2P device 2) into a local forwarding table.

S204b: The P2P device 2 writes an encryption key and Wi-Fi capability information of a P2P GC (that is, the P2P device 3) into the local forwarding table.

For example, an action of the P2P device 3 is similar to 109a performed by the P2P device 1, and details are not described herein again.

For example, the P2P device 2 serves as the GO, and the local forwarding table of the P2P device 2 may record a forwarding entry corresponding to each of a plurality of GCs, where each forwarding entry includes a corresponding encryption key and a Wi-Fi capability of the GC.

For example, the P2P group to which the P2P device 2 belongs currently includes two GCs: the P2P device 1 and the P2P device 3. As shown in Table 1, the local forwarding table of the P2P device 2 records a forwarding entry corresponding to the P2P device 1 (including an encryption key 1, the Wi-Fi capability information of the P2P device 1, and MAC address information of the P2P device 1) and a forwarding entry corresponding to the P2P device 3 (including an encryption key 2, the Wi-Fi capability information of the P2P device 3, and MAC address information of the P2P device 3).

**Table 1**

| Identification information of a device | Wi-Fi capability information of a device | Encryption key |
|---|---|---|
| MAC address information of the P2P device 1 | Wi-Fi capability information of the P2P device 1 | Encryption key 1 |
| MAC address information of the P2P device 3 | Wi-Fi capability information of the P2P device 3 | Encryption key 2 |
| ... | | |

S205: The P2P device 2 and the P2P device 3 transmit data.

For example, when the P2P device 2 exchanges data with the P2P device 1 through the P2P connection to the P2P device 1 based on the forwarding entry of the P2P device 1 recorded in the local forwarding table, the P2P device 2 may further exchange data with the P2P device 3 through a P2P connection to the P2P device 3 based on the forwarding entry of the P2P device 3 recorded in the local forwarding table. For a specific exchange process, refer to the descriptions in S110. Details are not described herein again.

It should be noted that, as described above, in the P2P group, the GO may detect, through listening, a probe request message sent by another P2P device, and respond to the probe request message. However, the GC cannot detect, through listening, a probe request message and does not respond. Therefore, only the GO (for example, the P2P device 2) has the capability of inviting another P2P device to join the P2P group. In other words, another P2P device that wants to join the P2P group can discover only the GO in the P2P group, but cannot discover the GC in the P2P group. Therefore, the another P2P device can only exchange data with the GO in the P2P group, but cannot exchange data with the GC in the P2P group.

Correspondingly, because the GC can only exchange data with the GO, and one P2P group can have only one GO, only a forwarding entry corresponding to the GO is recorded in a local forwarding table of the GC. However, a plurality of GCs may exist in the P2P group. Correspondingly, forwarding entries corresponding to the plurality of GCs may be recorded in a local forwarding table of the GO, as shown in Table 1.

In conclusion, because the GC is limited to a single link, in other words, the GC can only communicate with the GO in the P2P Group to which the GC belongs, a scenario in which a user wants to communicate with a P2P device other than the P2P device 2 by using the GC (for example, the P2P device 1) cannot be implemented by using the existing P2P communication procedure in the 802.11 protocol.

In addition, the P2P device 3 shown in FIG. 2B is a device that does not join any P2P group. For example, it is assumed that the P2P device 3 is a GO in another P2P group. As described above, the GO is configured to listen to a probe request message sent by another device, to invite the another device to join a P2P group to which the GO belongs. Therefore, the P2P device 2 and the P2P device 3, as GOs, do not send a probe request message, but only listen to a probe request message sent by another device. Therefore, as GOs in respective groups, the P2P device 2 and the P2P device 3 cannot discover each other. Therefore, according to the 802.11 protocol, GOs in different P2P groups cannot communicate with each other. Correspondingly, a scenario in which the user wants to use the P2P device 3 to communicate with the P2P device 2 when the P2P device 3 is used as a GO in another P2P group cannot be implemented by using the existing P2P communication procedure in the 802.11 protocol.

An embodiment of this application provides a communication method. According to the method, based on a set protocol procedure, any two devices in a plurality of devices can exchange data through a Wi-Fi connection without negotiating a GO and a GC. This breaks a limit of establishing a Wi-Fi connection between the GO and the GC. Any two devices in the plurality of devices may establish a Wi-Fi connection, and may interact based on the established Wi-Fi connection.

The following describes the communication method in this embodiment of this application in detail with reference to specific embodiments.

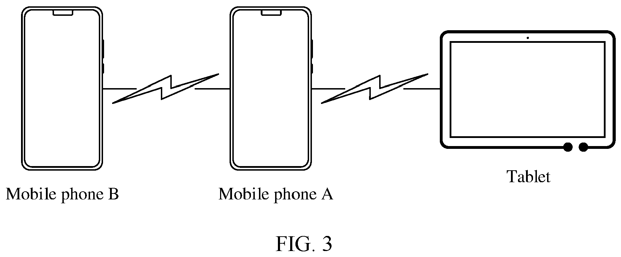

FIG. 3 is a schematic diagram of an example of an application scenario. Refer to FIG. 3. For example, the application scenario includes a mobile phone A, a mobile phone B, and a tablet. It should be noted that a quantity and types of devices included in a scenario in embodiments of this application, for example, the scenario shown in FIG. 3, are merely examples, and are not limited in this application.

In this embodiment of this application, in the application scenario in FIG. 3, an example in which the mobile phone A and the tablet perform a multi-screen collaboration service, and the mobile phone A and the mobile phone B share a picture by using a Huawei Share application is used for description. It should be noted that, in this embodiment of this application, only a scenario in which an electronic device (including the mobile phone A, the tablet, and the mobile phone B) performs data exchange by using a Huawei Share application and a multi-screen collaboration application is used as an example for description. In another embodiment, the electronic device may alternatively exchange data by using another application or service that supports the communication procedure (which may also be referred to as a communication protocol or a proprietary protocol) in embodiments of this application. This is not limited in this application.

The following describes implementation of the application scenario in FIG. 3 in detail by using a specific embodiment.

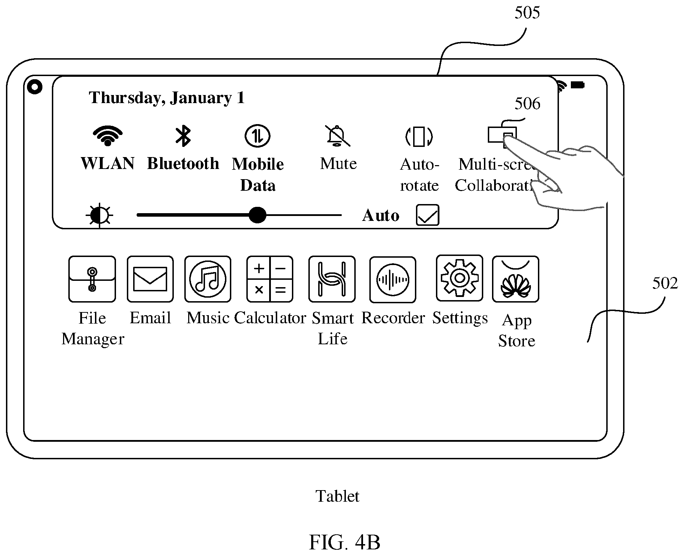

Refer to FIG. 4B. For example, a tablet display interface 402 may include a plurality of controls, including but not limited to an application control, a battery control, a network control, and the like. For example, a user may invoke a drop-down notification bar of the tablet. For example, the user slides down from an upper edge of a screen of the tablet, and the tablet may display a drop-down notification bar 404 on the display interface 402 in response to a received user operation. For example, the drop-down notification bar 404 includes a plurality of controls, and the controls include but are not limited to a WLAN control, a Bluetooth control, a mobile data control, a mute control, an automatic rotation control, a multi-screen collaboration control 406, a brightness adjustment control, and the like. Optionally, each control in the drop-down notification bar 404 may be used to indicate to enable or disable a corresponding function or application, or may be used to indicate a current state (that is, an enabled state or a disabled state) of each function or application.

It should be noted that, in this embodiment of this application, an example in which a WLAN function and a Bluetooth function are enabled on the mobile phone A and the tablet is used for description. Correspondingly, network controls on display interfaces of the mobile phone A and the tablet include a WLAN control and a Bluetooth control, which are used to indicate that the WLAN function and the Bluetooth function are enabled.

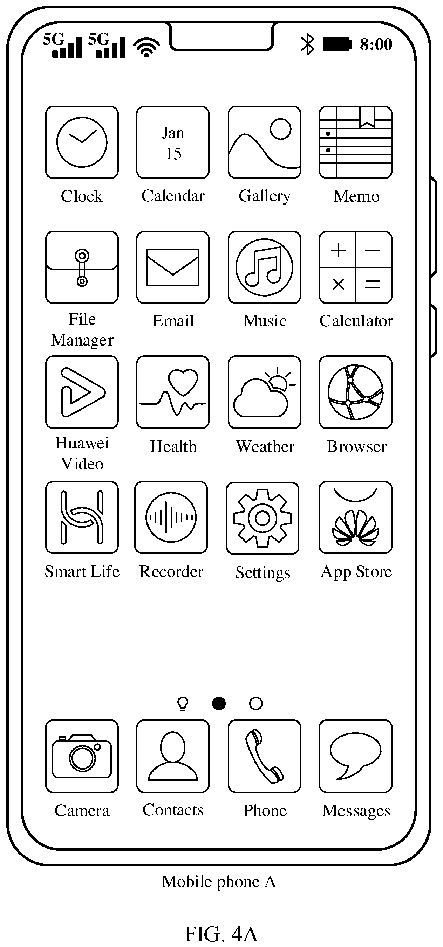

Refer to FIG. 4A and FIG. 4B. For example, the mobile phone A may currently display a home page. It should be noted that an example is used for description in this embodiment of this application, and in the example, the current display interfaces of the mobile phone A and the tablet are only home pages, and a multi-screen collaboration service is performed when the mobile phone A and the tablet display the home pages. In another embodiment, the interfaces currently displayed by the mobile phone A and the tablet may alternatively be other interfaces. This is not limited in this application.

Still refer to FIG. 4B. For example, the user may tap the multi-screen collaboration control 406 in the drop-down notification bar 404.

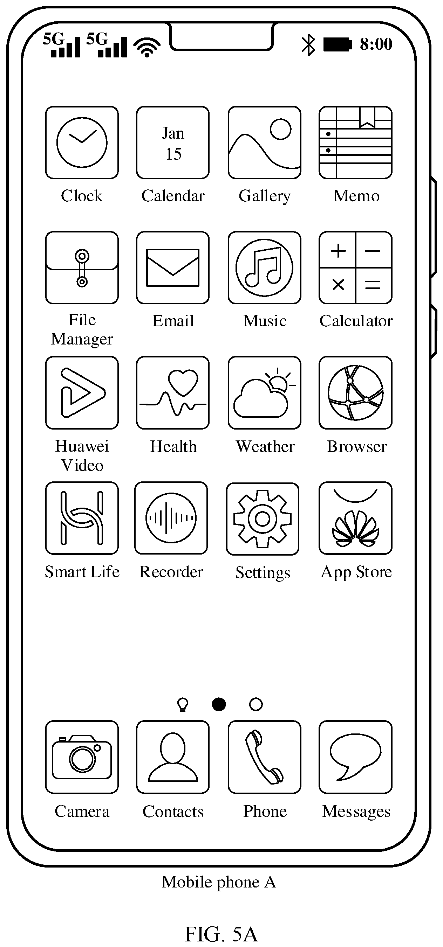

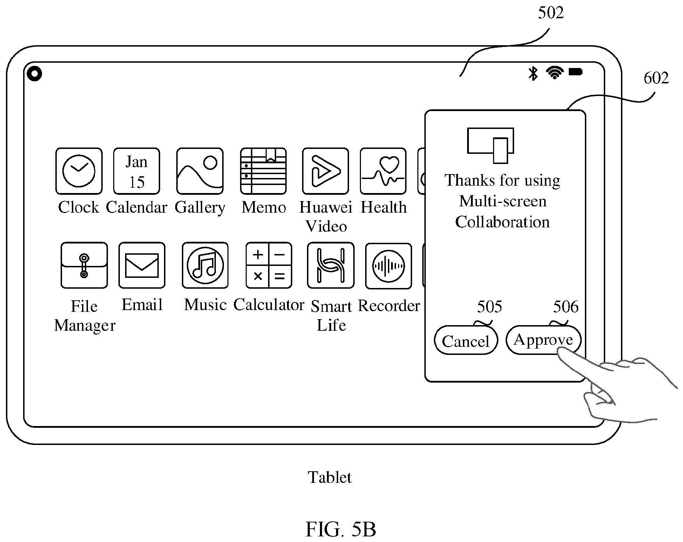

Refer to FIG. 5B. For example, the tablet displays a multi-screen collaboration prompt box 502 in the display interface 402 in response to the received operation of tapping the multi-screen collaboration control 406 by the user. Optionally, the prompt box 502 includes a "Cancel" control 504, an "Approve" control 506, and prompt information. The prompt information indicates that a multi-screen collaboration application is currently being used. For example, if the user taps the "Cancel" control 504, the tablet may cancel the multi-screen collaboration prompt box 502 in response to the user operation. For example, in this embodiment of this application, the user may tap the "Approve" control 506, to start a multi-screen collaboration procedure.

It should be noted that, in this embodiment of this application, when the user performs an operation on the tablet, an interface currently displayed on the mobile phone A is still the home page. In another embodiment, the user may alternatively perform another operation on the mobile phone A. This is not limited in this application.

It should be further noted that, in this embodiment of this application, an example in which the WLAN function and the Bluetooth function are enabled on the tablet and the mobile phone A is used. For example, the network controls displayed on current display interfaces of the tablet and the mobile phone A both include the WLAN control and the Bluetooth control, to indicate that the WLAN function and the Bluetooth function are enabled. Optionally, in another embodiment, the tablet is used as an example. It is assumed that at least one function of the WLAN function or the Bluetooth function of the tablet is not enabled. For example, the WLAN function is enabled, and the Bluetooth function is not enabled. In an example, the user may enable the Bluetooth function in a settings application or the drop-down notification bar. In another example, after the user taps the "Approve" control 506, the tablet correspondingly enables the Bluetooth function in response to a received user operation of tapping a Bluetooth control in the setting application, a Bluetooth control in the drop-down notification bar, or the "Approve" control 506.

It should be further noted that, in addition to the manner of starting the multi-screen collaboration function by using the drop-down notification bar shown in FIG. 4B, the tablet may start the multi-screen collaboration function in another manner. For example, after the tablet taps the mobile phone A, the tablet may determine to start the multi-screen collaboration application, and display the prompt box 502. A manner of starting the multi-screen collaboration is not limited in this application.

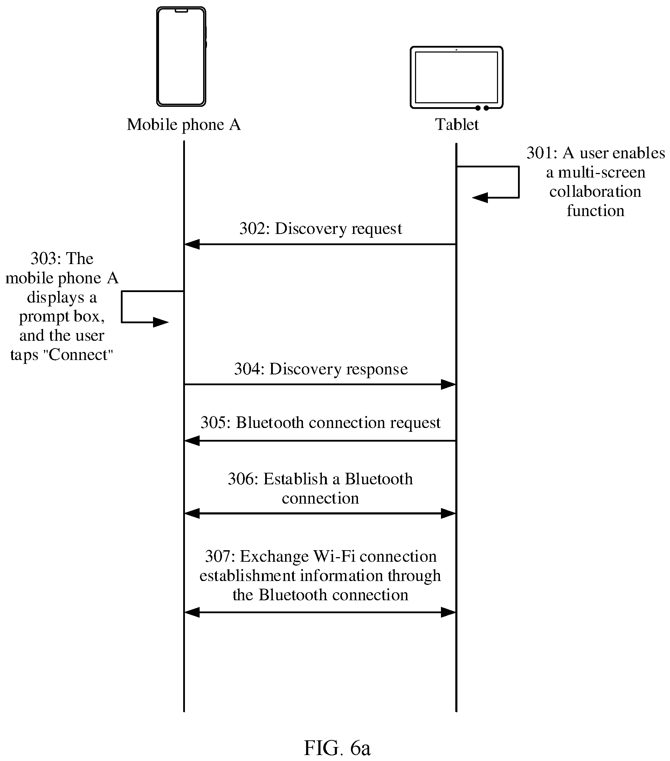

For example, in response to a received operation of tapping the "Approve" control 506 by the user, the tablet determines that the multi-screen collaboration function is enabled, and may perform Bluetooth communication with a nearby device such as the mobile phone A based on Bluetooth, to transmit a parameter or information required for subsequent Wi-Fi communication. The following describes a Bluetooth communication procedure between the tablet and the mobile phone A in detail with reference to a schematic flowchart of Bluetooth communication between the tablet and the mobile phone A shown in FIG. 6a. Refer to FIG. 6a. The procedure specifically includes the following steps.

S301: The tablet enables the multi-screen collaboration function.

For example, in this embodiment of this application, after the tablet is powered on or initialized, the multi-screen collaboration application may register to a Nearby service. The application registering to the Nearby service may be understood as the application expecting the Nearby service to provide a corresponding service for the application during use of the application. An example is used for description. As described above, the WLAN function and the Bluetooth function need to be enabled to use the multi-screen collaboration application. In other words, a service capability supported by the multi-screen collaboration includes the WLAN function and the Bluetooth function. A multi-screen collaboration service may register to the Nearby service, and request to invoke the WLAN function and the Bluetooth function during use of the multi-screen collaboration service.

For example, after the user starts the multi-screen collaboration application, for example, after the user taps the "Approve" control 506, the Nearby service (which may also be referred to as a Nearby application) detects that the multi-screen collaboration application is started. For example, the Nearby service may detect, through an interface, that the multi-screen collaboration application is started, or the multi-screen collaboration application may send a request message to the Nearby service after the multi-screen collaboration application is started. This is not limited in this application.

S302: The tablet sends a discovery request (discovery request) message.

For example, after determining that the multi-screen collaboration application is started, the Nearby service may enter a scanning phase. Optionally, the Nearby service may invoke a bottom-layer module or a chip. For example, the Nearby service may invoke a D2D service, so that the D2D service initiates a Bluetooth connection establishment process. Optionally, the D2D service may further invoke a D2D driver, so that the D2D driver controls a Bluetooth chip to broadcast the discovery request message in real time or periodically.

It should be noted that, in this embodiment of this application, Bluetooth communication between devices, for example, Bluetooth communication between the tablet and the mobile phone A, may be maintained by using Bluetooth Low Energy (Bluetooth Low Energy, BLE), or may be maintained by using classic Bluetooth. This is not limited in this application.

For example, the discovery request message carries device information of the tablet. Optionally, the device information includes but is not limited to identification information of the tablet (for example, a device name, a device model, or Bluetooth address information) or the like. This is not limited in this application.

Refer to FIG. 8B. For example, after determining that the multi-screen collaboration application is started, the tablet optionally displays a multi-screen collaboration prompt box 802 on the display interface 402. Optionally, a size and a location of the multi-screen collaboration prompt box 802 and the multi-screen collaboration prompt box 502 may be the same, or may be different. This is not limited in this application. For example, the prompt box 802 may include a "Cancel" control 804. Optionally, if the user taps the "Cancel" control 804, the tablet cancels displaying the prompt box 802 in response to the operation of tapping the "Cancel" control 804 by the user, and stops broadcasting the discovery request message.

Optionally, the prompt box 802 further includes first prompt information and second prompt information, where the first prompt information indicates that the tablet is connecting to another electronic device. The second prompt information indicates that a connection to another electronic device may be established by scanning a code. For example, the second prompt information may be a text "Your phone is not discovered? Scan to connect". Optionally, the user may tap "Scan to connect" to start a camera, and obtain device information of the mobile phone A by scanning the code, so that Bluetooth communication with the mobile phone A can be performed based on the device information of the mobile phone A, and then a subsequent multi-screen collaboration step can be performed.

S303: The mobile phone A displays a prompt box, and receives an operation behavior of tapping a "Connect" control by the user.

For example, the multi-screen collaboration application on the mobile phone A also registers to the Nearby service in advance. For specific descriptions, refer to related descriptions on the tablet side. Details are not described herein again.

For example, after the mobile phone A receives the discovery request message sent by the tablet, the mobile phone A may obtain device information of the tablet. It should be noted that, in this embodiment of this application, both sending and receiving of Bluetooth signaling (or message) are completed by a Bluetooth chip and the Nearby service in collaboration. For example, after receiving the Bluetooth message, the Bluetooth chip may output information carried in the message to the Nearby service, and the Nearby service sends a corresponding instruction and data to an application (for example, the multi-screen collaboration application). The multi-screen collaboration application may perform response processing based on the received instruction and data. Interaction between the Bluetooth chip, the Nearby service, and the multi-screen collaboration application is implemented through interfaces between layers, and is not described in the following sections.

For example, the display interface of the mobile phone A may display a prompt box 806, and the prompt box 806 includes but is not limited to identification information 808 of the tablet. Optionally, the identification information 808 of the tablet may be an icon of the tablet, or may be a device name of the tablet, or may be a model of the tablet, or the like. This is not limited in this application. Optionally, the mobile phone A may prestore a correspondence between a device icon and device information. For example, the mobile phone A stores a correspondence between an icon of the tablet and a device type of the tablet (that is, an indication that the device is a tablet). After the mobile phone A receives a BLE discovery request message, the mobile phone A may find that a device type of a sending device is the tablet, obtain a locally stored device icon corresponding to the device type of the tablet, and display the device icon in the prompt box 806.

For example, the prompt box 806 further includes a "Cancel" control 810 and a "Connect" control 812. For example, the "Cancel" control 810 is configured to cancel displaying the prompt box 606, which may also be understood as refusal to perform multi-screen collaboration with the tablet.

For example, in this embodiment of this application, the user taps the "Connect" control 812. Correspondingly, the mobile phone A receives an operation of tapping the "Connect" control 812 by the user, and the mobile phone A determines to perform multi-screen collaboration with the tablet.

S304: The mobile phone A sends a discovery response (discovery response) message to the tablet.

For example, in response to the received operation of tapping the "Connect" control 812 by the user, the mobile phone A may send the discovery response message to the tablet based on a Bluetooth protocol and the Bluetooth address information of the tablet that is obtained from the discovery request message, to indicate to perform multi-screen collaboration with the tablet.

Optionally, the discovery response message sent by the mobile phone A carries the device information of the mobile phone A. The device information includes but is not limited to Bluetooth address information of the mobile phone A, identification information (such as a device name or a device model) of the mobile phone A, and the like. This is not limited in this application.

It should be noted that this application shows only a manner of communication between the mobile phone A and the tablet. In another embodiment, if there is another device that can receive the discovery request message broadcast by the tablet and that has a multi-screen collaboration function and a display function near the tablet, the device also displays a prompt box 806. Another device on which the multi-screen collaboration application is not installed, that is, a device that does not have the multi-screen collaboration function, does not reply to the tablet with a discovery response message when receiving a discovery request message. In addition, an electronic device on which the multi-screen collaboration application is installed but the communication procedure is not supported in this embodiment of this application does not reply to the tablet with a discovery response message. In this embodiment of this application, the electronic device corresponding to the discovery response message received by the mobile phone A is a preset device. Optionally, the preset device is a device on which a specified application is installed and that supports the communication protocol in this embodiment of this application. For example, if no discovery response message returned by any device is received within specified duration (for example, 2s), the mobile phone A may initiate a Wi-Fi connection establishment procedure to a nearby electronic device, that is, a non-preset device, according to a procedure in the 802.11 protocol (for example, the procedure in FIG. 2A and FIG. 2B). It should be noted that when the mobile phone A and the tablet establish the Wi-Fi connection according to the procedure in the 802.11 protocol, optionally, the mobile phone A and another device may still establish a Wi-Fi connection according to a communication procedure in this embodiment of this application.

In a possible implementation, it is assumed that the user uses the mobile phone A and the tablet for the multi-screen collaboration service, where the mobile phone A is the preset device in this embodiment of this application, and the multi-screen collaboration application is installed on the tablet, but the tablet does not support the communication protocol in this embodiment of this application, that is, the tablet is a non-preset device. Optionally, the mobile phone A may establish the Wi-Fi connection to the tablet according to the P2P connection procedure in the 802.11 protocol or according to another standard or a proprietary procedure, and perform data exchange. For example, if a non-preset device can receive the discovery request message, and send the discovery response message to the mobile phone A, optionally, the discovery response message carries device information of the non-preset device, for example, a device model, and identification information indicating whether the communication protocol in this embodiment of this application is supported. The mobile phone A may determine, based on the discovery response message sent by the non-preset device, that the peer device is a non-preset device. In this case, the mobile phone A may establish a Wi-Fi connection to the non-preset device according to a procedure in an existing protocol.

It should be further noted that, if the Bluetooth function of the mobile phone A is enabled, but the WLAN function is not enabled, after the user taps the "Connect" control 812, the mobile phone A may automatically enable the WLAN function in response to the received user operation. For example, the WLAN control in the drop-down notification bar of the mobile phone A being on indicates that the WLAN function is enabled.

It should be further noted that, compared with the electronic device in the procedure in the 802.11 protocol shown in FIG. 2A and FIG. 2B, an electronic device in this application (for example, the tablet, the mobile phone A, and a mobile phone B below) can discover another device according to the Bluetooth protocol, to avoid a problem, between GOs and between GCs, that a peer device cannot be discovered due to limitation on roles of the GOs and the GCs defined in the 802.11 protocol.

For example, the GC in the P2P group in the 802.11 protocol cannot send a discovery message during communication with the GO due to a limitation on the role of the GC. In other words, the GC cannot communicate with another electronic device (neither the GO nor a GC). According to the communication method in this embodiment of this application, the electronic device may discover another electronic device according to the Bluetooth protocol. Because Bluetooth communication is not affected by Wi-Fi communication, during Wi-Fi communication with a plurality of electronic devices, the electronic device may also discover another electronic device according to the Bluetooth protocol.

S305: The tablet sends a Bluetooth connection request message to the mobile phone A.

For example, the tablet receives the discovery response message sent by the mobile phone A, and the tablet may send the Bluetooth connection request message to the mobile phone A based on the Bluetooth address information of the mobile phone A carried in the discovery response message, to indicate to establish a Bluetooth connection to the mobile phone A. Optionally, the connection request message carries information such as the Bluetooth address information of the mobile phone A and the Bluetooth address information of the tablet. This is not limited in this application.

S306: The mobile phone A establishes a Bluetooth connection to the tablet.

For example, after receiving the Bluetooth connection request message sent by the tablet, the mobile phone A establishes the Bluetooth connection to the tablet.

It should be noted that in S306, the mobile phone A and the tablet may exchange Bluetooth signaling for a plurality of times, to transmit information required for Bluetooth connection establishment. For a specific interaction process, refer to content in the Bluetooth protocol. Details are not described again in this application.

It should be further noted that, in this embodiment of this application, S306 being a start moment of establishing the Bluetooth connection is an example for description. In another embodiment, S302 may alternatively be understood as the start moment of establishing the Bluetooth connection. Any interaction process in S302 to S306 can also be understood as the start moment of establishing the Bluetooth connection. This is not limited in this application.

S107: The mobile phone A and the tablet exchange Wi-Fi connection establishment information through the Bluetooth connection.

For example, after the mobile phone A establishes the Bluetooth connection to the tablet, the mobile phone A and the tablet may exchange data through the Bluetooth connection. For example, in this embodiment of this application, the mobile phone A and the tablet may exchange, through the Bluetooth connection, the Wi-Fi connection establishment information used in a subsequent Wi-Fi connection establishment procedure.

For example, the Wi-Fi connection establishment information in this embodiment of this application includes a pre-encryption key and all or a part of Wi-Fi capability information.

For example, the pre-encryption key is encryption information required for Wi-Fi connection establishment. Take a WPA-PSK (Wi-Fi Protected Access-Preshared Key, Wi-Fi Protected Access-Preshared Key) as an example. The PSK is shared between two communication parties, and the preshared key is used only in an authentication process for Wi-Fi connection establishment, but is not used in a data encryption process. A pairwise transient key (Pairwise Transient Key, PTK) is a pairwise temporal key, that is, includes an encryption key pair. When a sending device (for example, the mobile phone A) and a receiving end (for example, the tablet) exchange data, the sending device may encrypt data based on a key in the key pair, and the receiving end may decrypt the data based on another key in the key pair. The PTK may be generated based on the PSK and the four-way handshake process, and is used to encrypt data during data transmission.

For example, a universal set of Wi-Fi capability information may include but is not limited to channel information, MAC address information, protocol field information, MIMO information (for example, a quantity of MIMO antennas), and the like. For example, in this embodiment of this application, the mobile phone A and the tablet transmit a part of the Wi-Fi capability information of the mobile phone A and the tablet in the Bluetooth communication process. Optionally, the part of the Wi-Fi capability information includes MAC address information and channel information of the device.

For example, the channel information indicates a channel on which the device operates. Optionally, the channel information may be a frequency corresponding to the channel on which the device operates, and/or a channel number corresponding to the channel on which the device operates. For example, the tablet optionally operates on the channel 40, and the mobile phone A optionally operates on the channel 40 and a channel 44.

For example, the mobile phone A sends the pre-encryption key, the MAC address information of the mobile phone A, and the channel information (for example, the channel 40 and the channel 44) of the mobile phone A to the tablet through the Bluetooth connection between the mobile phone A and the tablet. The tablet sends the pre-encryption key, the MAC address information of the tablet, and the channel information (for example, the channel 40) of the tablet to the mobile phone A through the Bluetooth connection between the tablet and the mobile phone A.

For example, as described above, in addition to the MAC address information and the channel information, the Wi-Fi capability information further includes other information used for data transmission, such as MIMO information and a protocol field. Optionally, after the Wi-Fi connection is established, the two communication parties interact with each other through the Wi-Fi connection. This reduces Bluetooth transmission power consumption and shortens Wi-Fi connection establishment duration.

For example, the mobile phone A receives a channel number sent by the tablet, and stores, in a memory, the channel number, the Bluetooth address of the tablet, the device information of the tablet, and the like that correspond. Correspondingly, the tablet may obtain the channel numbers (that is, the channel 40 and the channel 44) sent by the mobile phone A, and the tablet stores, in the memory, the channel numbers of the mobile phone A, the Bluetooth address of the mobile phone A, the device information of the mobile phone A, and the like that correspond.

For example, FIG. 7a is a schematic diagram of an example format of Bluetooth information (which may also be referred to as a packet, a message, or signaling). Refer to FIG. 7a. For example, the Bluetooth information includes but is not limited to a preamble field, an access address field, a header field, a data field, and a check field. Optionally, the header field includes a channel information field, a MAC address field, and a pre-encryption key field. Take the mobile phone A as an example. In a process of performing Wi-Fi capability negotiation between the mobile phone A and the tablet, the mobile phone A sends Bluetooth information to the tablet. A format of the Bluetooth information is shown in FIG. 7a. A channel information field carries a channel number (for example, the channel 40) corresponding to a channel supported by the mobile phone A. A MAC address field is used to carry the MAC address information of the mobile phone A, and the pre-encryption key field is used to carry the pre-encryption key.

Optionally, after Wi-Fi capability information exchange between the mobile phone A and the tablet is completed, the mobile phone A may break the Bluetooth connection to the tablet, to reduce power consumption.

For example, after respective Wi-Fi capabilities are exchanged between the mobile phone A and the tablet, the mobile phone A and the tablet stores the Wi-Fi capability information of the peer device. Optionally, the Wi-Fi capability information is stored in the memory.

For example, the mobile phone A and the tablet exchange data through the Bluetooth connection. After obtaining the Wi-Fi capability of the peer device, the mobile phone A and the tablet may establish the Wi-Fi connection based on the obtained Wi-Fi capability, and exchange data through the Wi-Fi connection.

Refer to FIG. 6b-1 and FIG. 6b-2. For example, a process of Wi-Fi communication between the mobile phone A and the tablet includes the following steps.

S401: The tablet sends a D2D association request action (D2D association request action) message to the mobile phone A.

For example, the tablet sends the D2D association request action message to the mobile phone A, to initiate a procedure of establishing a Wi-Fi connection to the tablet A. It should be noted that, in this embodiment of this application, S401 is a Wi-Fi connection establishment start moment. In another embodiment, the Wi-Fi connection establishment start moment may be another interaction process, for example, a four-way handshake process in the following descriptions. This is not limited in this application.

Still refer to FIG. 6b-1 and FIG. 6b-2. For example, as described above, in a process of Bluetooth communication between the tablet and the mobile phone A, the tablet has already stored a pre-encryption key and a part of the Wi-Fi capability information of the mobile phone A. The part of the Wi-Fi capability information includes but is not limited to the channel information of the mobile phone A and the MAC address information of the mobile phone A. Correspondingly, the mobile phone A has already stored the pre-encryption key and the Wi-Fi capability information of the tablet. A part of the Wi-Fi capability information of the tablet includes but is not limited to the channel information of the tablet and the MAC address information of the tablet. For example, the tablet and the mobile phone A may implement a Wi-Fi link establishment process based on the stored pre-encryption key and the Wi-Fi capability information. For example, the tablet may send the D2D association request action message to the mobile phone A on the channel supported by the mobile phone A (for example, the channel 40, where it should be noted that the channel is also supported by the tablet), where the D2D association request action message carries the MAC address information of the mobile phone A. In other words, in a process of establishing a Wi-Fi connection between devices in the 802.11 protocol, full-band scanning is required. For example, according to the 802.11 protocol, the tablet needs to send a discovery (probe) message on all available channels on a 4 GHz frequency band and all available channels on a 5 GHz frequency band, to detect a nearby device that can perform Wi-Fi communication. In this embodiment of this application, because the tablet has obtained the channel information of the mobile phone A through Bluetooth communication, the tablet only needs to send the D2D association request action message on one or more channels supported by the mobile phone A. This reduces resource occupation and improves Wi-Fi connection efficiency. In addition, the D2D association request action message sent by the tablet carries the MAC address information of the mobile phone A. In other words, the tablet may send, through targeted sending, the D2D association request action message to a specified device, that is, the mobile phone A. Compared with a manner in which a discovery message needs to be broadcast in the 802.11 protocol, this manner can further reduce resource occupation, and improve Wi-Fi connection efficiency.

For example, the D2D association request action message includes but is not limited to the Wi-Fi capability information of the tablet. It should be noted that, as described above, a set (that is, a universal set) of Wi-Fi capability information includes but is not limited to channel information, MAC address information, protocol field information, MIMO information, and the like. In a phase of Bluetooth communication between the mobile phone A and the tablet, the mobile phone A and the tablet exchange a part of the Wi-Fi capability information. Correspondingly, the D2D association request action message may carry a part that is of the Wi-Fi capability information of the tablet and that is not transmitted during Bluetooth communication, and the part may include but is not limited to a modulation scheme (for example, a modulation and coding scheme (Modulation and Coding Scheme, MCS)), a quantity of MIMO antennas, and protocol field information (for example, a cyclic prefix (Cyclic Prefix, CP)).

Optionally, in this embodiment of this application, the tablet is an initiator of multi-screen collaboration. In other words, the user triggers the multi-screen collaboration function on the tablet. Correspondingly, as the initiator of multi-screen collaboration, the tablet also serves as an initiator in the Wi-Fi connection establishment process, that is, an initiator of Wi-Fi connection establishment, and sends the D2D association request action message to a receiving end (that is, the mobile phone A). Optionally, in another embodiment, the user may perform an operation on the mobile phone A to start the multi-screen collaboration application. For example, the user may slide upward from the bottom at a left edge of the mobile phone A to start the multi-screen collaboration application (function) on the mobile phone A. In this case, the mobile phone A serves as the initiator of multi-screen collaboration to perform the steps performed by the tablet in the foregoing descriptions, and the tablet correspondingly serves as the multi-screen collaboration acceptance end (or receiving end) to perform the steps performed by the mobile phone A in the foregoing descriptions. In addition, as the initiator, the mobile phone A may send the D2D association request action message to the tablet in the Wi-Fi connection establishment process, to request to establish the Wi-Fi connection to the tablet.

S402: The mobile phone A sends a D2D association response action message to the tablet.

For example, after receiving the D2D association request action message sent by the tablet, the mobile phone A obtains and stores the information carried in the D2D association request action message, for example, information such as the modulation scheme and the protocol field.

For example, the mobile phone A sends the D2D association response action message to the tablet. Optionally, the D2D association response action message carries the Wi-Fi capability information of the mobile phone A, for example, information such as a modulation scheme supported by the mobile phone A.

Optionally, in a process in which the mobile phone A and the tablet exchange signaling, every time the mobile phone A and the tablet each receive a message sent by the peer device, the mobile phone A and the tablet each may return an acknowledgment (Acknowledgment, ACK) message, so that the peer device determines that the message is successfully sent (that is, the receiving end successfully receives the message). The tablet is used as an example. The tablet sends the D2D association request action message to the mobile phone A, and the mobile phone A returns the ACK message to the tablet in response to the received D2D association request action message. After receiving the ACK message, the tablet determines that the mobile phone A successfully receives the D2D association request action message. For example, if the tablet does not receive, within specified duration, the ACK message returned by the mobile phone A, the tablet repeatedly sends the D2D association request action message to the mobile phone A. For example, after the tablet sends the D2D association request action message for a plurality of times (for example, three times), if the tablet does not receive the ACK message fed back by the mobile phone A, the Wi-Fi communication procedure is canceled, that is, the multi-screen collaboration procedure is canceled. Optionally, a reason why the tablet does not receive the ACK message fed back by the mobile phone A may be that the mobile phone A disables the WLAN function or the like. This is not limited in this application.

For example, FIG. 7b is a schematic diagram of an example format of Wi-Fi information, for example, the D2D association request action message and the D2D association response action message. Refer to FIG. 7b. For example, the Bluetooth information includes but is not limited to a frame control field, a frame body field, and a check field. Optionally, the frame body field includes an action field (action field) and the like. Optionally, the action field includes a type field, an action details (action details) field, and the like. Optionally, the action details field includes a Wi-Fi capability information field and the like. For example, the Wi-Fi capability information field may include Wi-Fi capability information that needs to be transmitted, for example, information such as a modulation scheme, a quantity of MIMO antennas, and protocol field information.

In embodiments of this application, the electronic devices (including tablets, mobile phone A, and mobile phone B in the following descriptions) perform information exchange with specific signaling to establish a Wi-Fi connection, without performing GO and GC negotiation. In this way, limitation caused by roles of the GO and GC on establishment of the Wi-Fi connection can be avoided.

S403: The mobile phone A performs four-way handshake with the tablet.

For example, the mobile phone A performs four-way handshake with the tablet to negotiate an encryption key. It should be noted that an agreed encryption key in the four-way handshake process is information used for encryption in data transmission. For example, the PSK mentioned above is optionally the encryption key in this embodiment of this application. It should be further noted that, as described above, the PSK is a temporal key, that is, the encryption key agreed by the mobile phone A and the tablet is applicable only to a data transmission process of current Wi-Fi communication. In other words, if the Wi-Fi connection between the mobile phone A and the tablet is broken, after the Wi-Fi connection is re-established, a key obtained through re-negotiation by the mobile phone A and the tablet is different from the current agreed key.

It should be noted that four-way handshake process includes four signaling exchanges. For a specific process, refer to a four-way handshake process in the 802.11 protocol. Details are not described again in this application.

For example, after a key is agreed by the mobile phone A and the tablet, the agreed encryption key is configured in a Wi-Fi chip, for example, in a register of the Wi-Fi chip. This is not limited in this application.

Optionally, the encryption key may be generated by the mobile phone A, and sent to the tablet. After receiving the encryption key, the tablet may send an acknowledgment message to the mobile phone A. Optionally, the encryption key may also be generated by the tablet and sent to the mobile phone A. After receiving the encryption key, the mobile phone A may send an acknowledgment message to the tablet.

S404a: The mobile phone A writes an encryption key 1 and the Wi-Fi capability information of the tablet into a local forwarding table.

S404b: The tablet writes the encryption key 1 and the Wi-Fi capability information of the mobile phone A into a local forwarding table.

For example, after the mobile phone A performs four-way handshake with the tablet, it may be considered that the Wi-Fi connection between the tablet and the mobile phone A is successfully established. The mobile phone A correspondingly writes the Wi-Fi capability information of the tablet and the key agreed in S403 into the local forwarding table. Optionally, the local forwarding table may also be referred to as a local routing table, and the local routing table is configured in a Wi-Fi chip. Take the mobile phone A as an example. It should be noted that the Wi-Fi capability information recorded in the local routing table of the mobile phone A is a universal set of the Wi-Fi capability information of the tablet. In other words, the Wi-Fi capability (such as the MAC address information and the channel information) exchanged during Bluetooth communication and the Wi-Fi capability (such as a CP length and the quantity of MIMO antennas) exchanged during Wi-Fi communication are included.

For example, as shown in Table 2, the local forwarding table of the mobile phone A records a correspondence between the MAC address information, the encryption key (for example, the encryption key 1), the modulation scheme of the tablet, and the like. The tablet is similar to the mobile phone A, and details are not described herein again.

**Table 2**

| Identification information of a device | Wi-Fi capability information of a device | Encryption key |
|---|---|---|
| MAC address information of the tablet | Wi-Fi capability information of the tablet | Encryption key 1 |
| | | |
| | | |

For example, the local forwarding table is used by a Wi-Fi chip of a device (for example, the mobile phone A or the tablet) to receive and send a data packet based on an entry in the local forwarding table. Specific details are described in a data transmission process below.

S405: The mobile phone A and the tablet transmit data through the Wi-Fi connection.

The following describes in detail a data transmission process between the mobile phone A and the tablet with reference to FIG. 6c. Refer to FIG. 6c. The data transmission process specifically includes the following steps.

S601: The multi-screen collaboration application on the mobile phone A generates a data packet including a display interface image.

Refer to FIG. 9A. For example, the multi-screen collaboration application may generate a data packet based on a current display interface of the mobile phone A. For example, a process in which the multi-screen collaboration application generates the data packet optionally includes: The multi-screen collaboration application encodes an image corresponding to the display interface, to generate a corresponding image frame, and encapsulates the image frame to generate the data packet. In addition to the image frame, the data packet further includes but is not limited to destination MAC address information (for example, the MAC address of the tablet) and source MAC address information (for example, the MAC address information of the mobile phone A).

S602: The Wi-Fi chip of the mobile phone A matches the destination MAC address information of the data packet with MAC address information in the local forwarding table.

For example, the multi-screen collaboration application may output the generated data packet to the Wi-Fi chip, and the Wi-Fi chip matches a destination MAC address (that is, the MAC address of the tablet) in the data packet with the MAC address information in the local forwarding table (for example, the local forwarding table shown in Table 2).

In an example, if the destination MAC address in the data packet does not match the MAC address in the local forwarding table, it can be determined that the mobile phone A does not establish the Wi-Fi connection to a device corresponding to the MAC address. The Wi-Fi chip discards the data packet.

In another example, if the destination MAC address in the data packet successfully matches the MAC address in the local forwarding table, the procedure proceeds to S603.

S603: The Wi-Fi chip of the mobile phone A obtains an encryption key and Wi-Fi capability information that correspond to the successfully matched MAC address information.

For example, the mobile phone A obtains the encryption key and the Wi-Fi capability information that correspond to the successfully matched MAC address in the local forwarding table, for example, the encryption key and the Wi-Fi capability information that correspond to the successfully matched MAC address (that is, the MAC address of the tablet) are included. The Wi-Fi capability information includes the modulation scheme, a quantity of MIMO antennas, and the like of the tablet.

S604: The Wi-Fi chip of the mobile phone A encrypts the data packet based on the encryption key, and performs data modulation based on the Wi-Fi capability information.

For example, the mobile phone A may encrypt the data packet based on the encryption key, and perform data modulation based on the modulation scheme in the Wi-Fi capability information (for example, a CP length, an MCS, and a quantity of MIMO antennas).

S605: The Wi-Fi chip of the mobile phone A sends a data packet to the tablet.

For example, the mobile phone A sends an encrypted and modulated data packet to the tablet through the Wi-Fi connection to the tablet.

S606: The Wi-Fi chip of the tablet matches a source MAC address in the data packet with the MAC address information in the local forwarding table.

For example, the Wi-Fi chip of the tablet receives the data packet sent by the mobile phone A, and matches the source MAC address carried in the data packet with the MAC address in the local forwarding table.

In an example, if the source MAC address in the data packet does not match the MAC address in the local forwarding table, the Wi-Fi chip discards the data packet.

In another example, if the source MAC address in the data packet successfully matches the MAC address in the local forwarding table, the procedure proceeds to S407.

S607: The Wi-Fi chip of the tablet obtains the encryption key and the Wi-Fi capability information that correspond to the successfully matched MAC address.

Content of this step is similar to that of S603 performed by the mobile phone A, and details are not described herein again.

S608: The Wi-Fi chip of the tablet performs data demodulation based on the Wi-Fi capability information, and performs decryption based on the encryption key.

For example, the tablet may demodulate the data packet based on the obtained Wi-Fi capability information, and decrypt the data packet based on the obtained encryption key, to obtain the image frame carried in the data packet.

S609: The multi-screen collaboration application of the tablet displays the image.

For example, the Wi-Fi chip of the tablet may output the obtained image frame to an upper layer, for example, the multi-screen collaboration application. Optionally, the multi-screen collaboration application may decode the image frame to obtain a corresponding image (that is, the display interface of the mobile phone A). Refer to FIG. 9B. For example, the tablet displays an image obtained in a multi-screen collaboration application window 902, that is, a current display interface of the mobile phone A.

It should be noted that FIG. 6c shows only a process in which the mobile phone A sends data to the tablet. A process in which the tablet sends data to the mobile phone A is similar to that in FIG. 6c, and details are not described herein again.

For example, in this embodiment of this application, in a process in which the mobile phone A performs multi-screen collaboration with the tablet, the mobile phone A may further exchange data with the mobile phone B through a Wi-Fi connection. For example, in this embodiment of this application, when the mobile phone A performs a multi-screen collaboration service with the tablet, the mobile phone A and the mobile phone B perform a Huawei Share service. An example in which the mobile phone A shares a picture with the mobile phone B through a Huawei Share application is used to describe an application scenario in FIG. 3.

Refer to FIG. 6b-1 and FIG. 6b-2. A specific procedure in which the mobile phone A sends an image to the mobile phone B by using Huawei Share may include the following steps.

S501: The mobile phone B enables a Huawei Share function.

Refer to FIG. 10(1). For example, a home page of the mobile phone B is currently displayed in a display interface 1002 of the mobile phone B, and the display interface 1002 includes a plurality of controls, including but not limited to an application control, a network control, and the like. For example, a user may slide down from an upper edge of the mobile phone B, to call up a drop-down notification bar of the mobile phone B, and the mobile phone B displays a drop-down notification bar 1004 in the display interface 1002 in response to the received user operation. It should be noted that, in this embodiment of this application, an example in which the home page is displayed in the display interface 1002 of the mobile phone B is used for description. In another embodiment, the display interface 1002 may alternatively display an application interface of any application on the mobile phone B. This is not limited in this application.

Still refer to FIG. 8A and FIG. 8B. For example, the drop-down notification bar 1004 optionally includes a plurality of controls, including but not limited to a WLAN control, a Bluetooth control, a mobile data control, a Huawei Share control 1006, and the like. It should be noted that names and a quantity of the controls in FIG. 8 A and FIG. 8B are merely examples. This is not limited in this application.

For example, in this embodiment of this application, the user may tap the Huawei Share control 1006 in the drop-down notification bar 1004. Refer to FIG. 10(2). For example, the mobile phone B displays a prompt box 1008 in the display interface 1002 in response to the received operation of tapping the Huawei Share control 1006 by the user. Optionally, the prompt box 1008 includes but is not limited to prompt information, and is used to indicate that after the Huawei Share function is enabled, a nearby device may be automatically found during file sharing, and then fast transfer can be performed without using data. WLAN and Bluetooth need to be activated for enabling the function.

For example, the prompt box 1008 further includes a "Cancel" control 1010 and an "OK" control 1012. Optionally, if the user taps the "Cancel" control 1010, the mobile phone B responds to the tap operation of the user and cancels the prompt box 1008, that is, does not enable the Huawei Share function. In this embodiment of this application, the user taps the "OK" control 1012 to enable the Huawei Share function of the mobile phone B. It should be noted that, in this embodiment of this application, an example in which a WLAN function and a Bluetooth function of the mobile phone B are enabled is used for description. In another embodiment, if the WLAN function and/or the Bluetooth function are/is not enabled, after the mobile phone B receives the operation of tapping the "OK" control 1012 by the user, the WLAN function and the Bluetooth function are automatically enabled.

S502: The mobile phone A receives the operation of tapping the Huawei Share control by the user.

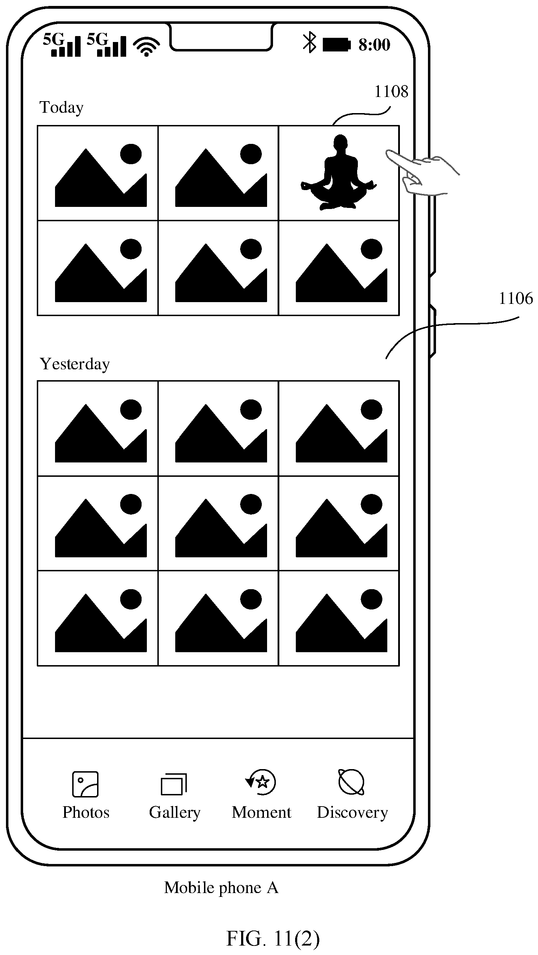

For example, refer to FIG. 11(1). For example, the display interface 1102 of the mobile phone A includes a plurality of controls, including but not limited to an application control, a network control, and the like. For example, the user taps a gallery control 1104. Refer to FIG. 11(2). For example, the mobile phone A displays a gallery interface 1106 in response to the received operation of tapping the gallery control 1104 by the user. For example, the gallery interface 1106 includes but is not limited to thumbnails corresponding to some or all images stored in the mobile phone A. Optionally, the gallery interface 1106 may further include another control. A quantity and a layout of pictures and controls shown in FIG. 11(2) are merely examples. This is not limited in this application.

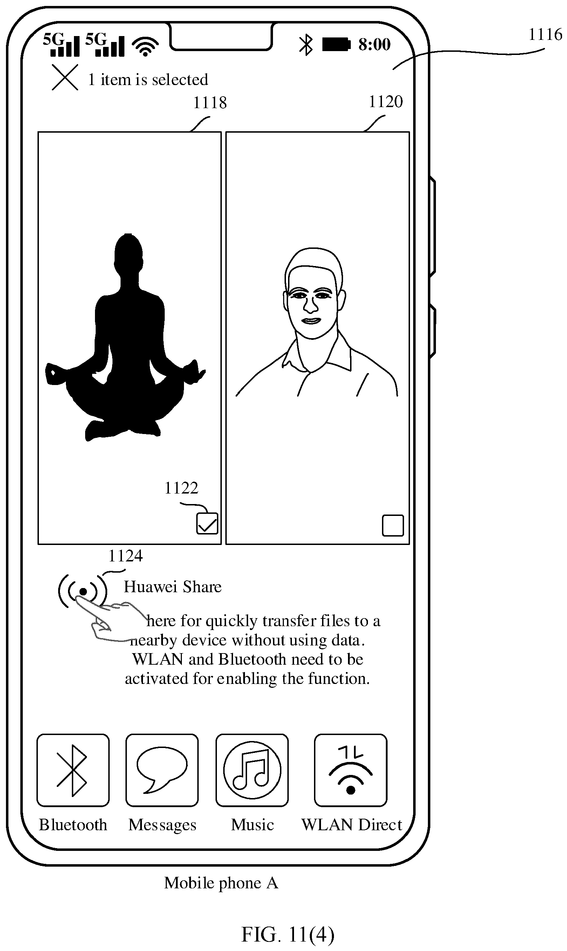

Refer to FIG. 11(2). For example, when the user taps a picture thumbnail 1108, the mobile phone A displays a picture preview interface 1110 in response to the received user operation. Optionally, the picture preview interface includes a preview picture 1112 and may further include a plurality of controls, including but not limited to: a sharing control 1114, an editing control, a deletion control, or the like. This is not limited in this application. For example, the user taps the sharing control 1114. Refer to FIG. 11(4). For example, the mobile phone A displays the picture sharing interface 1116 in response to the received operation of tapping the sharing control 1114 by the user. For example, the picture sharing interface 1116 includes a plurality of controls, including but not limited to a picture 1118 and a picture 1120. The picture 1118 and the picture 1120 further include a selection control, for example, a selection control 1122 included in the picture 1118. Optionally, the selection control 1122 is used to indicate that a picture (namely, the picture 1118) is selected as a to-be-shared picture. Optionally, the user may tap a selection control in 1120 to share a plurality of pictures at one time. In this embodiment of this application, only an example in which the mobile phone A shares the picture 1118 with the mobile phone B is used for description. For example, the picture sharing interface 1116 further includes a Huawei Share control 1124. Optionally, the Huawei Share control 1124 may include prompt information instructing the user to tap the control to quickly transfer a file to a nearby device without using data. The WLAN and the Bluetooth need to be activated to enable this function. In other words, similar to that described in FIG. 10(1) and FIG. 10(2), after the mobile phone A receives tapping of the Huawei Share control 1124 by the user, if the mobile phone A detects that either the WLAN function or the Bluetooth function is not enabled, the mobile phone A automatically enables the WLAN function and the Bluetooth function.

For example, in this embodiment of this application, before the mobile phone A performs multi-screen collaboration with the tablet or in a multi-screen collaboration process, the WLAN function and the Bluetooth function of the mobile phone A are enabled.

Optionally, the picture sharing interface 1116 further includes a control corresponding to another sharing manner, for example, a Bluetooth sharing control, an information sharing control, a music sharing control, and a WLAN direct sharing control.

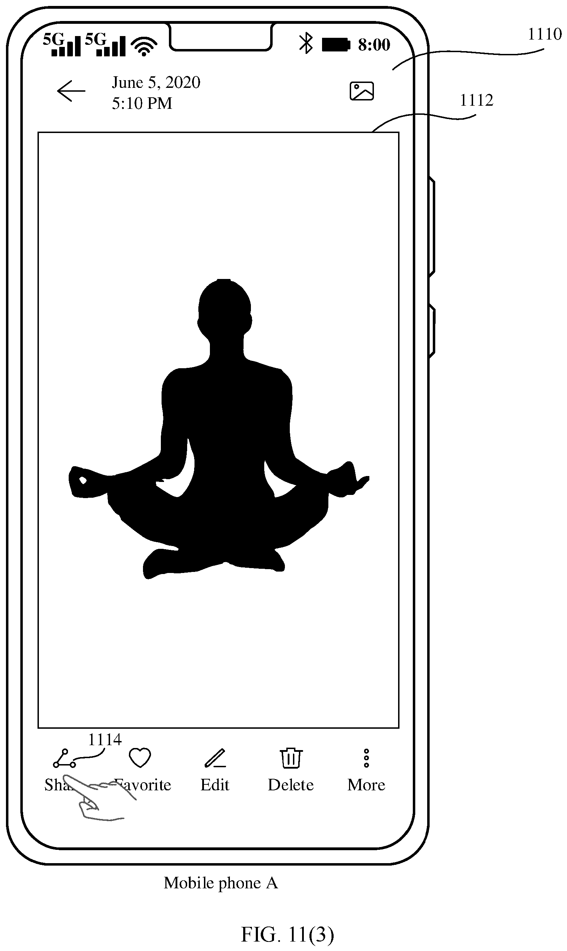

It should be noted that, in a process in which the user operates the mobile phone A, the mobile phone A and the tablet still perform the multi-screen collaboration service. Take FIG. 11(3) as an example. The mobile phone A sends an image corresponding to a picture preview interface 1110 in FIG. 11(3) to the tablet, and the tablet may display the picture preview interface 1110 in a multi-screen collaboration window 1102.

It should be further noted that, in this embodiment of this application, an example in which the user performs an operation on the mobile phone A is used for description. In another embodiment, in a process in which the mobile phone A and the tablet perform the multi-screen collaboration service, the user may perform an operation on a control in the multi-screen collaboration window 702 of the tablet, and the steps shown in the examples in FIG. 11(1) to FIG. 11(4) can also be implemented. Refer to FIG. 9B. For example, the user may tap a gallery control in the multi-screen collaboration window 902. The tablet receives a tapping operation of the user, and then sends indication information to the mobile phone A, where the indication information indicates the user to tap the gallery control corresponding to the mobile phone A. The mobile phone A may display, based on the received indication information, the gallery interface 1106 shown in FIG. 11(2), and send an image corresponding to the gallery interface 1106 to the tablet, so that the multi-screen collaboration window 902 of the tablet displays the gallery interface 1106. Optionally, in the multi-screen collaboration process, the mobile phone A may alternatively be in an off-screen state, and the user may perform an operation only in the multi-screen collaboration window of the tablet. The steps performed by the mobile phone A in this embodiment of this application can also be implemented. Details are not described again in this application.

It should be further noted that the manner of starting Huawei Share shown in FIG. 11(4) is applicable to an initiation device of the Huawei Share function, that is, a device sharing a picture or data to another device. Optionally, in another embodiment, the mobile phone A serving as an initiator of the Huawei Share function may also enable the Huawei Share function by using the method shown in FIG. 10(1) and FIG. 10(2). Correspondingly, in FIG. 11(3), after the user taps the sharing control 1114, the mobile phone A directly performs S503 in response to the tapping operation of the user, skipping the step in FIG. 11(4).

S503: The mobile phone A sends a discovery request message to the mobile phone B.

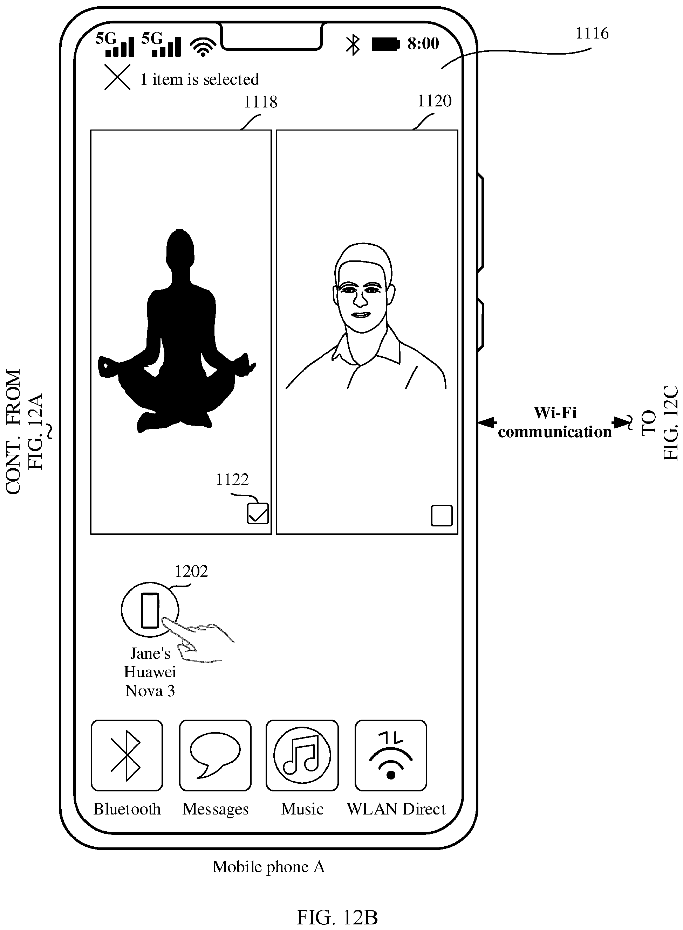

Refer to FIG. 12B. For example, the mobile phone A determines, in response to the received tapping of the Huawei Share control 1124 by the user, that the Huawei Share function of the mobile phone A is enabled, and the mobile phone A may search, based on a Bluetooth protocol, for a nearby device whose Huawei Share function is enabled. For example, the mobile phone A may periodically broadcast the discovery request message, to search for a nearby device whose Huawei Share function is enabled.

For example, in this embodiment of this application, Bluetooth communication between the mobile phone A and the mobile phone B may be maintained by using BLE, or may be maintained by using classic Bluetooth. This is not limited in this application.

S504: The mobile phone B sends a discovery response message to the mobile phone A.

For example, the Huawei Share function of the mobile phone B is enabled (as shown in FIG. 10(1) and FIG. 10(2)). After the mobile phone B receives the discovery request message sent by the mobile phone A, the mobile phone B returns the discovery response message to the mobile phone A. It should be noted that, in this embodiment of this application, all devices that enable the Bluetooth function and that are near the mobile phone A can receive the discovery request message sent by the mobile phone A. Optionally, after receiving the discovery request message, a device whose Huawei Share function is enabled, for example, the mobile phone B, sends the discovery response message to mobile phone A. After receiving the discovery request message, a device whose Huawei Share function is not enabled does not process the message.

It should be noted that, in this embodiment of this application, only an example in which the mobile phone B performs the Huawei Share service with the mobile phone A is used for description. In another embodiment, the mobile phone B can also perform the Huawei Share service with the tablet. In addition, any device in the mobile phone A, the mobile phone B, and the tablet may be used as an initiator of connection establishment, to discover another device. According to the P2P connection procedure in the 802.11 protocol shown in FIG. 2A and FIG. 2B, the P2P device 3 can only discover the GO (that is, the P2P device 2) in the P2P group and exchange data with the GO. Compared with the device in the foregoing manner, each device in this embodiment of this application executes a device discovery procedure according to a Bluetooth protocol. Therefore, any device in devices (for example, the mobile phone A and the tablet) that are performing data exchange may discover another device according to the Bluetooth protocol, to establish a Wi-Fi connection to the another device and perform data exchange. Similarly, a new device (for example, the mobile phone B) may discover, according to the Bluetooth protocol, any device in the devices that are performing data exchange, and establish a Wi-Fi connection to the device.

For details that are not described in S503 and S504, refer to related content in S302 and S304. Details are not described herein again.

S505: The mobile phone A displays a device list.

Still refer to FIG. 12B. In this embodiment of this application, the mobile phone A receives the discovery response message returned by the mobile phone B. For example, the mobile phone A displays a searched device in the picture sharing interface 1116 of the mobile phone A, that is, responds to the discovery response message.

Still refer to FIG. 12B. For example, the mobile phone A displays identification information 1202 of the mobile phone B in the picture sharing interface 1116. Optionally, the identification information 1202 of the mobile phone B may include but is not limited to at least one of the following pieces of information: an icon of the mobile phone B, a user account of the mobile phone B, a device name of the mobile phone B, a device model of the mobile phone B, and the like. For example, in this embodiment of this application, the identification information 1202 of the mobile phone B includes a user account (Jane) of the mobile phone B and a device model (HUAWEI nova 3) of the mobile phone B.

For example, the mobile phone A sends the currently displayed picture sharing interface 1116 to the tablet, and the current interface of the mobile phone A, that is, the picture sharing interface 1116, is displayed in the multi-screen collaboration window 902 of the tablet.

It should be noted that, in this embodiment of this application, an example in which the mobile phone B performs Huawei Share with the mobile phone A is used. In another embodiment, if there is another device whose Huawei Share function is enabled near the mobile phone A (for example, within two meters), related steps of the mobile phone B may also be performed. Repeated descriptions are not provided in this application.

S506: The mobile phone A receives an operation of selecting the mobile phone B by the user.

Still refer to FIG. 12B. For example, the user may tap the identification information 1202 of the mobile phone B, to share the picture 1118 with the mobile phone B.

For example, in response to the user's operation of tapping the identification information 1202 of the mobile phone B, the mobile phone A determines that the picture 1118 needs to be shared with a device indicated by the identification information 1202 of the mobile phone B.

S507: The mobile phone A sends a Bluetooth connection request to the mobile phone B.

For example, the mobile phone A receives the discovery response message sent by the mobile phone B. The mobile phone A may send a Bluetooth connection request message to the mobile phone B based on Bluetooth address information of the mobile phone B carried in the discovery response message, to indicate to establish a Bluetooth connection to the mobile phone B.

Optionally, the Bluetooth connection request message may carry picture information of a to-be-shared picture (for example, the picture 1119). For example, the picture information includes but is not limited to at least one of the following pieces of information: a picture size, a picture name, a quantity of shared files, and the like. It should be noted that, in this embodiment of this application, only picture sharing is used as an example for description. In another embodiment, if the mobile phone A shares data of another type, for example, an e-book, a video, or a folder, the Bluetooth connection request carries corresponding data information.

Optionally, the Bluetooth connection request message further carries other information such as Bluetooth address information of the mobile phone A and the mobile phone B, and user account information of the mobile phone B. This is not limited in this application.

S508: The mobile phone B displays a prompt box, and receives an operation behavior of tapping an "Accept" control by the user.

For example, after receiving the Bluetooth connection request message sent by the mobile phone A, the mobile phone B obtains picture information and other information (for example, the user account information) that are carried in the connection request. It should be noted that, in this embodiment of this application, both sending and receiving of Bluetooth signaling (or messages) are completed by using a Bluetooth chip and a Nearby service in collaboration. For example, after receiving the Bluetooth message, the Bluetooth chip may output information carried in the message to the Nearby service. The Nearby service sends corresponding instructions and data to an application (for example, the Huawei Share application). The multi-screen collaboration application may perform corresponding processing based on the received instructions and data. Interaction between the Bluetooth chip, the Nearby service, and the Huawei Share application is implemented through interfaces between layers.

Refer to FIG. 13A. For example, the mobile phone B may display a prompt box 1302 in the display interface 1002 in response to the received Bluetooth connection request message. The prompt box 1302 includes but is not limited to file sharing information 1304, a "Reject" control 1306, and an "Accept" control 1308.

For example, the file sharing information 1304 may include but is not limited to a quantity of to-be-received files (that is, files to be shared by the mobile phone A), a file size, a file name, a user account of a device that is to perform sharing (that is, a user account of the mobile phone A), and the like. For example, in this embodiment of this application, the file sharing information 1304 includes: a file quantity (one file), a file size (2M), a file name (IMG_20201004.jpg), and a user account (189*02). Optionally, prompt information "To be sent" is further included, and is used to indicate that a device corresponding to the user account is about to send one file to this device (that is, mobile phone B) through Huawei Share; a file size is 2M; and a file name is IMG_20201004.jpg.

For example, the "Reject" control 1306 is used to indicate rejection of receiving a file to be shared by the mobile phone A. For example, if the user taps the "Reject" control 1306, the mobile phone B cancels displaying of the prompt box 1302 in response to the received user operation, and breaks the Bluetooth communication with the mobile phone A.

For example, the "Accept" control 1308 is used to indicate approval of receiving the file to be shared by the mobile phone A. For example, if the user taps the "Accept" control 1308, the mobile phone B establishes the Bluetooth connection to the mobile phone A in response to the received user operation, that is, the procedure proceeds to S509.

S509: The mobile phone B establishes the Bluetooth connection to the mobile phone A.

For this step, refer to related descriptions in S306. Details are not described herein again.

S510: The mobile phone B and the mobile phone A exchange Wi-Fi capability information through the Bluetooth connection.

For example, after the mobile phone A establishes the Bluetooth connection to the tablet, the mobile phone A and the tablet may exchange data through the Bluetooth connection. For example, in this embodiment of this application, the mobile phone A and the tablet may transmit a pre-encryption key and a part or all of the Wi-Fi capability information of the mobile phone A and the tablet through the Bluetooth connection.

For example, in this embodiment of this application, after the mobile phone A and the mobile phone B interact through the Bluetooth connection, the mobile phone A may obtain the pre-encryption key, MAC address information of the mobile phone B, and channel information of the mobile phone B. Correspondingly, the mobile phone B may obtain the pre-encryption key, MAC address information of the mobile phone A, and channel information of the mobile phone A. It should be noted that the pre-encryption key agreed by the mobile phone A and the mobile B and the pre-encryption key agreed by the mobile phone A and the tablet in S307 may be the same or different. This is not limited in this application.

For other parts that are not described, refer to related content in S307. Details are not described herein again.

S511: The mobile phone A sends a D2D association request action message to the mobile phone B.

Still refer to FIG. 6b-1 and FIG. 6b-2. For example, as described above, in a process of Bluetooth communication performed by the mobile phone A and the mobile phone B, the mobile phone A has already stored the pre-encryption key, the channel information (for example, the channel 40) and the MAC address information of the mobile phone B, and the like. Correspondingly, the mobile phone A may send the D2D association request action message to the mobile phone B on a channel (for example, the channel 40) supported by the mobile phone A and the mobile phone B.

It should be noted that, in this embodiment of this application, an example in which the mobile phone A, the mobile phone B, and the tablet all work on the channel 40, that is, the Wi-Fi connection between the mobile phone A and the mobile phone B and the Wi-Fi connection between the mobile phone A and the tablet are established on the channel 40 is used for description. In other words, in this embodiment of this application, the two Wi-Fi connections corresponding to the mobile phone A (including the Wi-Fi connection to the tablet and the Wi-Fi connection to the mobile phone B) are connections on a same frequency and a same channel. Optionally, the Wi-Fi connection between the mobile phone A and the tablet and the Wi-Fi connection between the mobile phone A and the mobile phone B may be connections on a same frequency but on different channels, or may be connections on different frequencies. This is not limited in this application. For example, the Wi-Fi connection between the mobile phone A and the tablet works on a channel 40 of 5 GHz. If both the mobile phone A and the mobile phone B support the channel 44 of 5 GHz, optionally, the Wi-Fi connection between the mobile phone A and the mobile phone B may work on the channel 44 of 5 GHz. That is, the mobile phone A sends the D2D association request action message to the mobile phone B on the channel 44, and all Wi-Fi signaling subsequently exchanged between the mobile phone A and the mobile phone B is sent on the channel 44. Optionally, if both the mobile phone A and the mobile phone B support a channel 6 of 2.4 GHz, the Wi-Fi connection between the mobile phone A and the mobile phone B may work on the channel 6 of 2.4 GHz.

For other parts that are not described, refer to related content in S401. Details are not described herein again.

S512: The mobile phone B sends a D2D association response action message to the mobile phone A.

For example, in response to the received D2D association request action message, the mobile phone B obtains and stores the pre-encryption key and the part of the Wi-Fi capability information of the mobile phone A that are carried in the message.

For example, the mobile phone B sends the D2D association response action message to the mobile phone A, where the message carries the pre-encryption key and a part of the Wi-Fi capability of the mobile phone B, for example, information such as a modulation scheme supported by the mobile phone B.

For other parts that are not described, refer to related content in S402, and details are not described herein again.

S513: The mobile phone B performs four-way handshake with the mobile phone A.

For example, the mobile phone B and the mobile phone A perform four-way handshake to negotiate an encryption key.

Optionally, the encryption key agreed by the mobile phone B and the mobile phone A is different from the encryption key agreed by the mobile phone A and the tablet.

For other parts that are not described, refer to related content in S403. Details are not described herein again.

S514a: The mobile phone B writes the encryption key and the Wi-Fi capability information of the mobile phone A into a local forwarding table.

S514b: The mobile phone A writes the encryption key and the Wi-Fi capability information of the mobile phone B into a local forwarding table.

For example, after the mobile phone A and the mobile phone B perform four-way handshake, it may be considered that the Wi-Fi connection between the mobile phone B and the mobile phone A is successfully established. The mobile phone B correspondingly writes the Wi-Fi capability information of the mobile phone A and the agreed encryption key into the local forwarding table.

For example, as shown in Table 3, the local forwarding table of the mobile phone A records a correspondence between information such as the MAC address information, the encryption key, and a modulation scheme of the tablet, and a correspondence between information such as the MAC address information, the encryption key (for example, an encryption key 2), and the modulation scheme of the mobile phone B.

**Table 3**

| Identification information of a device | Wi-Fi capability information of a device | Encryption key |
|---|---|---|
| MAC address information of the tablet | Wi-Fi capability information of the tablet | Encryption key 1 |
| MAC address information of the mobile phone B | Wi-Fi capability information of the mobile phone B | Encryption key 2 |
| | | |

For example, the local forwarding table of the mobile phone B records a correspondence between information such as the MAC address information, the encryption key, and the modulation scheme of the mobile phone A. The tablet records a correspondence between information such as the MAC address information, the encryption key, and the modulation scheme of the mobile phone A.

Because the communication process in this embodiment of this application does not include role negotiation of a GO and a GC, an electronic device is not restricted by the roles of the GO and the GC, and either of two devices that are performing data exchange may perform a manner similar to that performed by the GO in a P2P protocol. In other words, a local forwarding table of any device may record forwarding entries corresponding to a plurality of devices connected to the device, to exchange data with the plurality of devices. In other words, in this embodiment of this application, a function of each electronic device is similar to the GO in the 802.11 protocol, or the function of each electronic device may be considered similar to an AP in the BSS. To be specific, one-to-many connection manner may be applied to each electronic device, that is, each electronic device establishes Wi-Fi connections with a plurality of electronic devices, and then data exchange is performed. Correspondingly, for the electronic device, functions of the plurality of the electronic devices connected to the electronic device are similar to that of the GC in the 802.11 protocol, or the functions of the plurality of the electronic devices may be considered similar to a STA in the BSS. It may be understood that, in this embodiment of this application, each electronic device considers the electronic device an AP, and considers another electronic device a STA. Correspondingly, each electronic device may record forwarding entries corresponding to other electronic devices, and exchange data with the plurality of electronic devices based on the recorded forwarding entries.

In this embodiment of this application, only an example in which the mobile phone B and the mobile phone A use Huawei Share for sharing is used for description. In another embodiment, the mobile phone B may further use Huawei Share for sharing with the tablet, or the mobile phone B may use Huawei Share for sharing with the mobile phone A and the tablet at the same time. This is not limited in this application.

S515: The mobile phone A and the mobile phone B transmit data through the Wi-Fi connection.

For example, the mobile phone A may exchange data with the mobile phone B through the Wi-Fi connection to the mobile phone B, to send the picture 1118 to the mobile phone B. For a specific exchange process, refer to the data transmission process between the mobile phone A and the tablet in S601. Details are not described herein again.

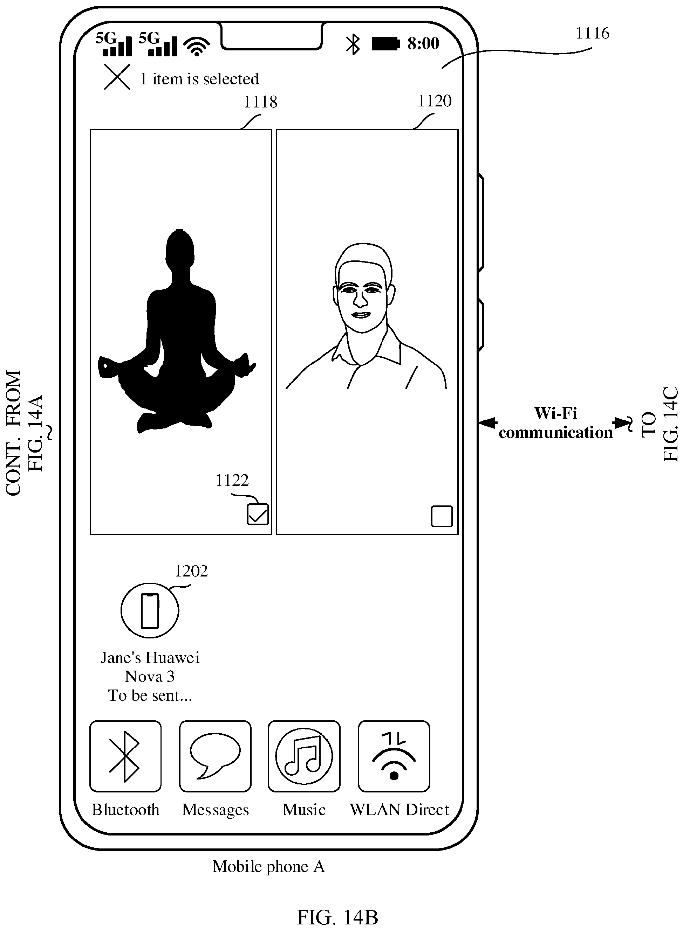

Refer to FIG. 14B. For example, after the mobile phone A receives the D2D association response action message returned by the mobile phone B and before the picture transmission is completed, the identification information 1202 of the mobile phone B in the picture sharing interface 1116 of the mobile phone A may present prompt information "To be sent", to indicate that the mobile phone A is sharing the picture 1118 with the mobile phone B.

Optionally, a prompt box 1402 may be displayed in the display interface 1002 of the mobile phone B. The prompt box 1402 may optionally include prompt information indicating that the picture is being received, and may further include a "Cancel" control and a "Hide" control. For example, if the user taps the "Cancel" control, the mobile phone B refuses to receive the picture 1118, cancels displaying of the prompt box 1402, deletes received pictures, and breaks the Wi-Fi connection to the mobile phone A. For example, if the user taps the hid control, the mobile phone B hides the prompt box 1402.

It should be noted that, in a process of picture sharing performed by the mobile phone A and the mobile phone B, the mobile phone A may further exchange data with the tablet through the Wi-Fi connection to the tablet, for example, send, to the tablet, the picture sharing interface 1116 currently displayed by the mobile phone A. To be specific, the mobile phone A may implement data packet sending and receiving with the mobile phone B and the tablet based on the forwarding entry related to the mobile phone B (including the MAC address, the modulation scheme, and the like of mobile phone B) and the forwarding entry related to the tablet (including the MAC address, the modulation scheme, and the like of the tablet) that are recorded in the local forwarding table.

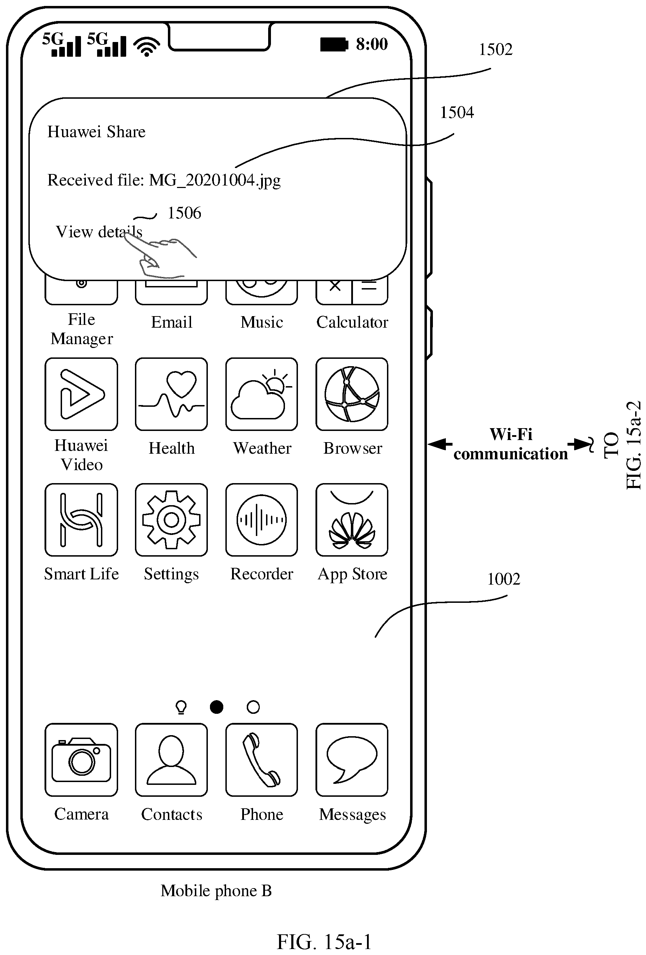

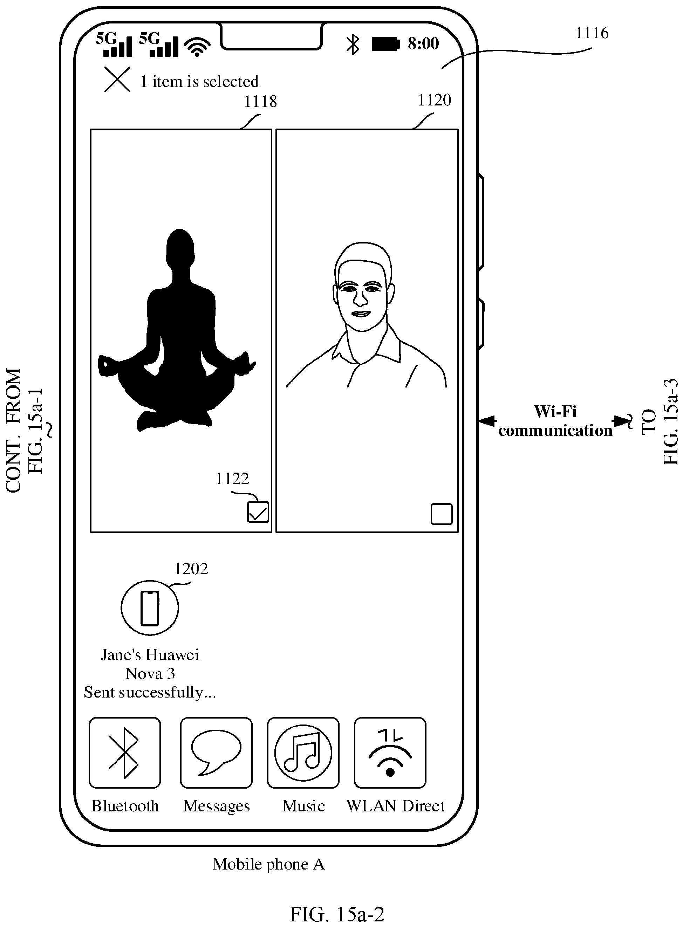

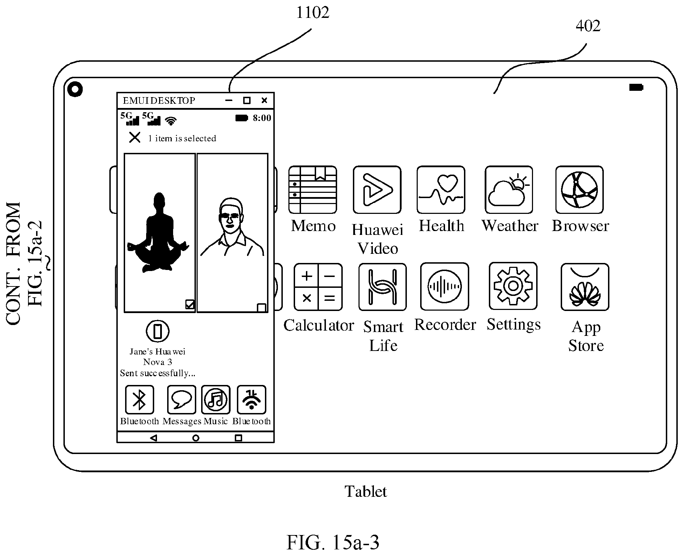

Refer to FIG. 15a-2. For example, after the mobile phone A successfully sends the picture to the mobile phone B, prompt information "Sent successfully" may be presented on the identification information 1202 of the mobile phone B in the picture sharing interface 1116 of the mobile phone A, to indicate that the picture is sent successfully.

Still refer to FIG. 15a-1. For example, after successfully receiving the picture 1118, the mobile phone A displays a prompt box 1502, where the prompt box 1502 optionally includes prompt information 1504 and a "View details" control 1506. For example, the prompt information 1502 includes a picture name, and indicates that a picture with a name "IMG_20201004.jpg" is successfully received.

For example, the user may tap the "View details" control 1506. Refer to FIG. 15b. The mobile phone B displays a Huawei Share interface 1508 in response to the received user operation. For example, the Huawei Share interface 1508 includes a plurality of controls, including but not limited to: a file type control (including a "picture" control, a "video" control, an "others" control, and the like) and a received file list 1510. For example, in this embodiment of this application, the received file list 1510 includes information such as a thumbnail corresponding to a received picture, a picture name, and a picture size.

For example, when the mobile phone A and the mobile phone B implement the Huawei Share service, and the mobile phone A and the tablet implement the multi-screen collaboration service, the mobile phone B may further initiate sharing to the tablet through Huawei Share, or the tablet may initiate sharing to the mobile phone B through Huawei Share. Correspondingly, when the Wi-Fi connection between the mobile phone A and the mobile phone B and the Wi-Fi connection between the mobile phone A and the tablet are retained, the mobile phone B may further establish a Wi-Fi connection to the tablet and perform data exchange. For a specific connection process, refer to the foregoing descriptions, and details are not described herein again.

It should be noted that, in this embodiment of this application, only Scenario 3, that is, a communication system including the mobile phone A, the tablet, and the mobile phone B, is used as an example for description. The communication method in this embodiment of this application may also be applied to data exchange between more or fewer devices.

Refer to FIG. 16a. In an example, a mobile phone A and a tablet A establish a Wi-Fi connection in the manner described in embodiments of this application, and perform multi-screen collaboration data exchange through the established Wi-Fi connection. The mobile phone A performs data exchange based on a forwarding entry of the tablet A recorded in a local forwarding table shown in Table 4 (for descriptions about the following concepts, refer to the foregoing descriptions).

**Table 4**

| Identification information of a device | Wi-Fi capability information of a device | Encryption key |
|---|---|---|
| MAC address information of the tablet A | Wi-Fi capability information of the tablet A | Encryption key 1 |
| | | |
| | | |

The tablet A implements data exchange between the mobile phone A and the tablet A based on a forwarding entry of the mobile phone A recorded in a local forwarding table. A mobile phone B and a tablet B establish a Wi-Fi connection in the manner described in embodiments of this application, and perform multi-screen collaboration data exchange through the established Wi-Fi connection. The mobile phone B performs data exchange based on a forwarding entry of the tablet B recorded in a local forwarding table shown in Table 5 (for descriptions about the following concepts, refer to the foregoing descriptions).

**Table 5**

| Identification information of a device | Wi-Fi capability information of a device | Encryption key |
|---|---|---|
| MAC address information of the tablet B | Wi-Fi capability information of the tablet B | Encryption key 2 |
| | | |
| | | |

The tablet B implements data exchange between the mobile phone B and the tablet B based on a forwarding entry of the mobile phone B recorded in a local forwarding table. In this scenario, the mobile phone B and the mobile phone A may exchange data according to the communication method in embodiments of this application. Through an established Wi-Fi connection, the mobile phone B may exchange data with the mobile phone A, for example, share a file in the mobile phone B with the mobile phone A. In a file sharing process, the mobile phone A may simultaneously exchange data with the tablet A based on the recorded forwarding entry of the tablet A, and may exchange data with the mobile phone B based on the recorded forwarding entry of the mobile phone B. For example, a current local forwarding table of the mobile phone A is shown in Table 6.

**Table 6**

| Identification information of a device | Wi-Fi capability information of a device | Encryption key |
|---|---|---|
| MAC address information of the tablet A | Wi-Fi capability information of the tablet A | Encryption key 1 |
| MAC address information of the mobile phone B | Wi-Fi capability information of the mobile phone B | Encryption key 3 |
| | | |

Correspondingly, the mobile phone B may simultaneously exchange data with the tablet B based on the recorded forwarding entry of the tablet B, and exchange data with the mobile phone A based on the recorded forwarding entry of the mobile phone A. For example, a current local forwarding table of the mobile phone A is shown in Table 6.

**Table 7**

| Identification information of a device | Wi-Fi capability information of a device | Encryption key |
|---|---|---|
| MAC address information of the tablet B | Wi-Fi capability information of the tablet B | Encryption key 2 |
| MAC address information of the mobile phone A | Wi-Fi capability information of the mobile phone A | Encryption key 3 |
| | | |

For a specific communication connection establishment process and a data transmission process, refer to the foregoing descriptions. Details are not described herein again.

In conclusion, in this embodiment of this application, GO/GC negotiation is not required during Wi-Fi connection establishment between electronic devices. Therefore, either electronic device (which may be the tablet B and/or the mobile phone B) in a communication system formed by the mobile phone B and the tablet B may establish a Wi-Fi connection to either electronic device (which may be the tablet A and/or the mobile phone A) in a communication system formed by the mobile phone A and the tablet A, and perform data exchange.

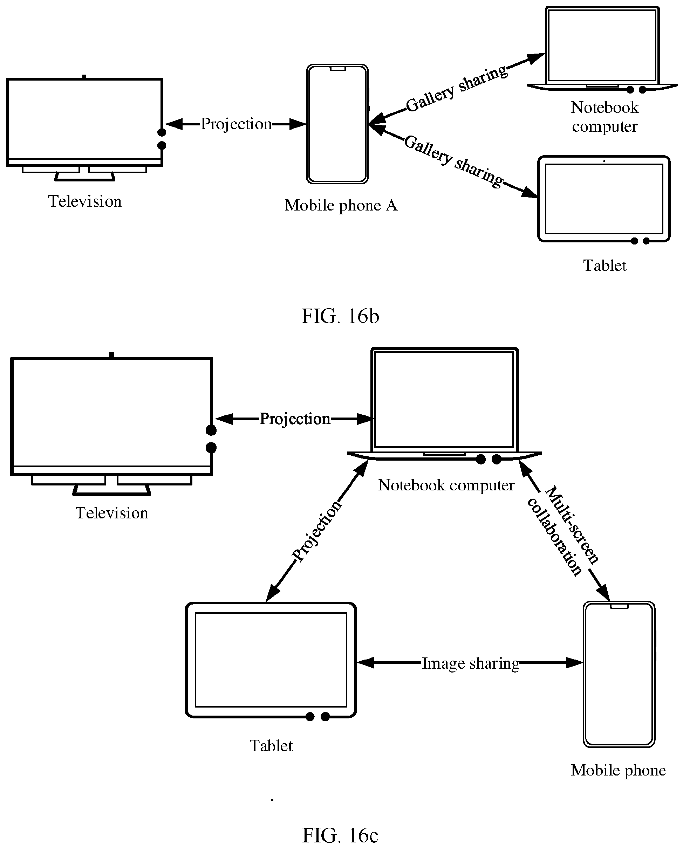

Refer to FIG. 16b. In another example, the mobile phone A establishes a Wi-Fi connection to a television in the manner described in embodiments of this application, and performs data exchange through the established Wi-Fi connection. For example, the mobile phone A projects a part of an interface of the mobile phone A to the television. During data exchange, the mobile phone A performs data exchange based on a forwarding entry of the television recorded in a local forwarding table, and the television performs data exchange based on a forwarding entry of the mobile phone A recorded in a local forwarding table. In this way, data exchange between the mobile phone A and the television is implemented. During data exchange between the mobile phone A and the television, that is, during projection to the television by the mobile phone A, the mobile phone A may establish Wi-Fi connections with a notebook computer and a tablet respectively according to the communication method in embodiments of this application. A function of gallery sharing between the mobile phone A and the notebook computer and a function of gallery sharing between the mobile phone A and the tablet can be implemented based on the established Wi-Fi connections. For example, the notebook computer may share a part of a gallery or the entire gallery of the notebook computer with the mobile phone A, and the tablet may share a part of a gallery or the entire gallery of the tablet with the mobile phone A. During data exchange, the mobile phone A may simultaneously exchange data with the tablet based on a forwarding entry of the tablet, exchange data with the notebook computer based on a forwarding entry of the notebook computer, and exchange data with the television based on a forwarding entry of the television, where the forwarding entries of the tablet, the notebook computer, and the television are recorded in a local forwarding table (as shown in Table 8). The television, the notebook computer, and the tablet may exchange data with the mobile phone A based on a recorded forwarding entry of the mobile phone A.

**Table 8**

| Identification information of a device | Wi-Fi capability information of a device | Encryption key |
|---|---|---|
| MAC address information of the television | Wi-Fi capability information of the television | Encryption key 1 |
| MAC address information of the notebook computer | Wi-Fi capability information of the notebook computer | Encryption key 2 |
| MAC address information of the tablet | Wi-Fi capability information of the tablet | Encryption key 3 |

Refer to FIG. 16c. In another example, the tablet establishes a Wi-Fi connection to the notebook computer in the manner described in embodiments of this application, and performs data exchange through the established Wi-Fi connection. For example, the tablet projects a part of an interface of the tablet to the notebook computer. During data exchange between the notebook computer and the tablet, that is, during projection to the notebook computer by the tablet, the notebook computer and the television establish a Wi-Fi connection in the manner described in embodiments of this application, and perform data exchange through the established Wi-Fi connection. For example, the notebook computer projects a part of an interface of the notebook computer to the television for screen extension. In this scenario, the mobile phone establishes a Wi-Fi connection to the notebook computer, and a multi-screen collaboration service between the mobile phone and the notebook computer are implemented. Optionally, while the mobile phone and the notebook computer are performing the multi-screen collaboration service, the tablet and the notebook computer are performing a projection service, and the notebook computer and the television are performing the projection service, the mobile phone may further share a picture with the tablet. In this scenario, the notebook computer may separately exchange data with the tablet, the mobile phone, and the television based on a forwarding entry of the tablet, a forwarding entry of the mobile phone, and a forwarding entry of the television that are recorded in a local forwarding table. Correspondingly, the television may exchange data with a corresponding electronic device based on a forwarding entry of the notebook computer recorded in a local forwarding table; the tablet may exchange data with a corresponding electronic device based on forwarding entries of the mobile phone and the notebook computer recorded in a local forwarding table; and the mobile phone may exchange data with a corresponding electronic device based on forwarding entries of the tablet and the notebook computer recorded in a local forwarding table. For content that is not described in FIG. 16a to FIG. 16c, refer to the content described in the scenario shown in FIG. 3. Details are not described herein again.

It may be understood that, to implement the foregoing functions, the electronic device includes corresponding hardware and/or software modules for performing the functions. Algorithm steps in examples described with reference to embodiments disclosed in this application may be implemented by hardware or a combination of hardware and computer software in this application. Whether a function is performed by hardware or hardware driven by computer software depends on a particular application and a design constraint of the technical solution. A person skilled in the art may use different methods to implement the described functions for each particular application with reference to the embodiments, but it should not be considered that the implementation goes beyond the scope of this application.

An embodiment further provides a computer storage medium. The computer storage medium stores computer instructions. When the computer instructions are run on an electronic device, the electronic device is enabled to perform the related method steps to implement the communication method in the foregoing embodiments.

An embodiment further provides a computer program product. When the computer program product is run on a computer, the computer is enabled to perform the foregoing related steps, to implement the communication method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the communication method in the foregoing method embodiments.

The electronic device, the computer storage medium, the computer program product, or the chip provided in the embodiments are configured to perform the corresponding method provided above. Therefore, for beneficial effects that may be achieved by the electronic device, the computer storage medium, the computer program product, or the chip, refer to beneficial effects of the corresponding method provided above. Details are not described herein again.

Based on the foregoing descriptions of the implementations, a person skilled in the art may understand that for the purpose of convenient and brief description, division of the foregoing functional modules is merely used as an example for description. In actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division of the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on an actual requirement to achieve objectives of the solutions of the embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

Content in all the embodiments of this application and any content in a same embodiment may be flexibly combined. Any combination of the foregoing content falls within the scope of this application.

When the integrated unit is implemented in the form of the software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, such as a USB flash drive, a removable hard disk, a read only memory (read only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make various modifications without departing from the principles of this application and the protection scope of the claims, and all the modifications shall fall within the protection scope of this application.

## Claims

1. A communication method, comprising:
receiving (S502), by a first electronic device, a first operation when the first electronic device and a second electronic device exchange data of a first service through a first Wi-Fi connection;
establishing (S509), by the first electronic device, a first Bluetooth connection to a third electronic device in response to the first operation;
sending (S511), by the first electronic device, address information of the first electronic device to the third electronic device through the first Bluetooth connection;
receiving (S511), by the third electronic device, the address information of the first electronic device that is sent by the first electronic device;
establishing (S513), by the third electronic device, a second Wi-Fi connection to the first electronic device based on the address information of the first electronic device; and
exchanging (S515), by the third electronic device, data of a second service with the first electronic device through the second Wi-Fi connection,
wherein a local forwarding table, for use for the respective data exchange through the first Wi-Fi connection and the second Wi-Fi connection, of the first electronic device comprises a forwarding entry of the second electronic device and a forwarding entry of the third electronic device, wherein
the forwarding entry, obtained through a Bluetooth connection between the first electronic device and the second electronic device, of the second electronic device comprises:
address information of the second electronic device, Wi-Fi capability information of the second electronic device, and a first encryption key; and
the forwarding entry**,** obtained through the first Bluetooth connection, of the third electronic device comprises:
address information of the third electronic device, Wi-Fi capability information of the third electronic device, and a second encryption key.

2. The method according to claim 1, wherein the method further comprises:
receiving, by the third electronic device, a second operation when the third electronic device and the first electronic device exchange the data of the second service through the second Wi-Fi connection;
establishing, by the third electronic device, a second Bluetooth connection to the second electronic device in response to the second operation;
sending, by the third electronic device, address information of the third electronic device to the second electronic device through the second Bluetooth connection;
when the second electronic device and the first electronic device exchange the data of the first service through the first Wi-Fi connection, receiving, by the second electronic device, the address information of the third electronic device that is sent by the third electronic device;
establishing, by the second electronic device, a third Wi-Fi connection to the third electronic device based on the address information of the third electronic device; and
exchanging, by the second electronic device, data of a third service with the third electronic device through the third Wi-Fi connection.

3. The method according to claim 2, wherein the establishing, by the first electronic device, a first Bluetooth connection to a third electronic device in response to the first operation comprises:
sending, by the first electronic device, first Bluetooth request information to the third electronic device in response to the first operation, wherein the first Bluetooth request information indicates to establish the first Bluetooth connection to the third electronic device;
receiving, by the third electronic device, the first Bluetooth request information; and
establishing, by the third electronic device, the first Bluetooth connection to the first electronic device in response to the first Bluetooth request information.

4. The method according to claim 3, wherein the establishing, by the third electronic device, a second Bluetooth connection to the second electronic device in response to the second operation comprises:
sending, by the third electronic device, second Bluetooth request information to the second electronic device in response to the second operation, wherein the second Bluetooth request information indicates to establish the second Bluetooth connection to the second electronic device;
receiving, by the second electronic device, the second Bluetooth request information; and
establishing, by the second electronic device, the first Bluetooth connection to the first electronic device in response to the second Bluetooth request information.

5. The method according to any one of claims 1 to 4, wherein the method further comprises:
sending, by the first electronic device, a first data packet to the second electronic device through the first Wi-Fi connection, wherein
the first data packet comprises the service data of the first service and the address information of the second electronic device, and the first data packet is obtained by the first electronic device through encryption based on the first encryption key and modulation based on the Wi-Fi capability information of the second electronic device.

6. The method according to any one of claims 1 to 4, wherein the method further comprises:
sending, by the first electronic device, a second data packet to the third electronic device through the second Wi-Fi connection, wherein
the second data packet comprises the service data of the second service and the address information of the third electronic device, and the second data packet is obtained by the first electronic device through encryption based on the second encryption key and modulation based on the Wi-Fi capability information of the third electronic device.

7. The method according to claim 1, wherein
the first service is any one of the following services:
a projection service, a sharing service, and a multi-screen collaboration service; and
the second service is any one of the following services:
a projection service, a sharing service, and a multi-screen collaboration service.

8. The method according to claim 1, wherein before the first electronic device and the second electronic device exchange the data of the first service through the first Wi-Fi connection, the method further comprises:
receiving, by the first electronic device, a third operation;
sending, by the first electronic device, third Bluetooth request information to the second electronic device in response to the third operation, wherein the third Bluetooth request information indicates to establish a Bluetooth connection to the second electronic device;
receiving, by the second electronic device, the third Bluetooth request information;
sending, by the second electronic device, third Bluetooth response information to the first electronic device, wherein the third Bluetooth response information indicates that the second electronic device is a preset device;
receiving, by the first electronic device, the third Bluetooth response information; and
establishing, by the first electronic device, a third Bluetooth connection to the second electronic device based on the third Bluetooth response information.

9. The method according to claim 1, wherein before the first electronic device and the second electronic device exchange the data of the first service through the first Wi-Fi connection, the method further comprises:
receiving, by the first electronic device, a fourth operation;
sending, by the first electronic device, fourth Bluetooth request information to the second electronic device in response to the fourth operation, wherein the fourth Bluetooth request information indicates to establish a Bluetooth connection to the second electronic device;
receiving, by the second electronic device, the fourth Bluetooth request information;
sending, by the second electronic device, fourth Bluetooth response information to the first electronic device, wherein the fourth Bluetooth response information indicates that the second electronic device is a non-preset device;
receiving, by the first electronic device, the fourth Bluetooth response information; and
based on the fourth Bluetooth response information, establishing, by the first electronic device, the first Wi-Fi connection to the second electronic device according to the 802.11 protocol.

10. The method according to claim 1, wherein before the first electronic device and the second electronic device exchange the data of the first service through the first Wi-Fi connection, the method further comprises:
receiving, by the first electronic device, a fifth operation;
sending, by the first electronic device, fifth Bluetooth request information to the second electronic device in response to the fifth operation, wherein the fifth Bluetooth request information indicates to establish a Bluetooth connection to the second electronic device; and
establishing, by the first electronic device, the first Wi-Fi connection to the second electronic device according to the 802.11 protocol when the first electronic device does not receive, within preset duration, Bluetooth response information sent by the second electronic device.

11. The method according to claim 1, wherein before the first electronic device and the second electronic device exchange the data of the first service through the first Wi-Fi connection, the method further comprises:
sending, by the first electronic device, the address information of the first electronic device and channel information of the first electronic device to the third electronic device through the first Bluetooth connection;
sending, by the third electronic device, first Wi-Fi connection request information to the first electronic device based on the address information of the first electronic device and the channel information of the first electronic device, wherein the first Wi-Fi connection request information indicates to establish the second Wi-Fi connection to the first electronic device, and the first Wi-Fi connection request information is information in a specific format; and
establishing, by the first electronic device, the second Wi-Fi connection to the third electronic device in response to the received first Wi-Fi connection request information.

12. A communication system comprising a first electronic device, a second electronic device and a third electronic device, each electronic device comprising:
a memory and a processor, wherein the memory is coupled to the processor; and
the memory stores program instructions, and when the program instructions are executed by the processor, the first, second and third electronic devices are enabled to perform the communication method according to any one of claims 1 to 11, respectively.

## Patentansprüche

1. Kommunikationsverfahren, das Folgendes umfasst:
Empfangen (S502), durch eine erste elektronische Vorrichtung, einer ersten Operation, wenn die erste elektronische Vorrichtung und eine zweite elektronische Vorrichtung Daten eines ersten Dienstes durch eine erste WLAN-Verbindung austauschen;
Einrichten (S509), durch die erste elektronische Vorrichtung, einer ersten Bluetooth-Verbindung mit einer dritten elektronischen Vorrichtung als Reaktion auf die erste Operation;
Senden (S511), durch die erste elektronische Vorrichtung, von Adressinformationen der ersten elektronischen Vorrichtung an die dritte elektronische Vorrichtung durch die erste Bluetooth-Verbindung;
Empfangen (S511), durch die dritte elektronische Vorrichtung, der Adressinformationen der ersten elektronischen Vorrichtung, die durch die erste elektronische Vorrichtung gesendet werden;
Einrichten (S513), durch die dritte elektronische Vorrichtung, einer zweiten WLAN-Verbindung mit der ersten elektronischen Vorrichtung basierend auf den Adressinformationen der ersten elektronischen Vorrichtung; und
Austauschen (S515), durch die dritte elektronische Vorrichtung, von Daten eines zweiten Dienstes mit der ersten elektronischen Vorrichtung über die zweite WLAN-Verbindung.
wobei eine lokale Weiterleitungstabelle zur Verwendung für den jeweiligen Datenaustausch durch die erste WLAN-Verbindung und die zweite WLAN-Verbindung der ersten elektronischen Vorrichtung einen Weiterleitungseintrag der zweiten elektronischen Vorrichtung und einen Weiterleitungseintrag der dritten elektronischen Vorrichtung umfasst, wobei
der Weiterleitungseintrag, der durch eine Bluetooth-Verbindung zwischen der ersten elektronischen Vorrichtung und der zweiten elektronischen Vorrichtung erhalten wird, der zweiten elektronischen Vorrichtung Folgendes umfasst:
Adressinformationen der zweiten elektronischen Vorrichtung. WLAN-Fähigkeitsinformationen der zweiten elektronischen Vorrichtung und eines ersten Chiffrierschlüssels; und
wobei der Weiterleitungseintrag, der über die erste Bluetooth-Verbindung erhalten wird, der dritten elektronischen Vorrichtung Folgendes umfasst:
Adressinformationen der dritten elektronischen Vorrichtung. WLAN-Fähigkeitsinformationen der dritten elektronischen Vorrichtung und einen zweiten Chiffrierschlüssel.

2. Verfahren nach Anspruch 1, wobei das Verfahren ferner Folgendes umfasst:
Empfangen, durch die dritte elektronische Vorrichtung, einer zweiten Operation, wenn die dritte elektronische Vorrichtung und die erste elektronische Vorrichtung die Daten des zweiten Dienstes durch die zweite WLAN-Verbindung austauschen;
Herstellen, durch die dritte elektronische Vorrichtung, einer zweiten Bluetooth-Verbindung mit der zweiten elektronischen Vorrichtung als Reaktion auf die zweite Operation;
Senden, durch die dritte elektronische Vorrichtung, von Adressinformationen der dritten elektronischen Vorrichtung an die zweite elektronische Vorrichtung durch die zweite Bluetooth-Verbindung;
wenn die zweite elektronische Vorrichtung und die erste elektronische Vorrichtung die Daten des ersten Dienstes durch die erste WLAN-Verbindung austauschen, Empfangen, durch die zweite elektronische Vorrichtung, der Adressinformationen der dritten elektronischen Vorrichtung, die durch die dritte elektronische Vorrichtung gesendet werden;
Herstellen, durch die zweite elektronische Vorrichtung, einer dritten WLAN-Verbindung mit der dritten elektronischen Vorrichtung basierend auf den Adressinformationen der dritten elektronischen Vorrichtung; und
Austauschen, durch die zweite elektronische Vorrichtung, von Daten eines dritten Dienstes mit der dritten elektronischen Vorrichtung über die dritte WLAN-Verbindung.

3. Verfahren nach Anspruch 2, wobei das Herstellen, durch die erste elektronische Vorrichtung, einer ersten Bluetooth-Verbindung zu einer dritten elektronischen Vorrichtung als Reaktion auf die erste Operation Folgendes umfasst:
Senden, durch die erste elektronische Vorrichtung, erster Bluetooth-Anforderungsinformationen an die dritte elektronische Vorrichtung als Reaktion auf die erste Operation, wobei die ersten Bluetooth-Anforderungsinformationen angeben, die erste Bluetooth-Verbindung mit der dritten elektronischen Vorrichtung herzustellen;
Empfangen, durch die dritte elektronische Vorrichtung, der ersten Bluetooth-Anforderungsinformationen; und
Herstellen, durch die dritte elektronische Vorrichtung, der ersten Bluetooth-Verbindung mit der ersten elektronischen Vorrichtung als Reaktion auf die ersten Bluetooth-Anforderungsinformationen.

4. Verfahren nach Anspruch 3, wobei das Herstellen, durch die dritte elektronische Vorrichtung, einer zweiten Bluetooth-Verbindung mit der zweiten elektronischen Vorrichtung als Reaktion auf die zweite Operation Folgendes umfasst:
Senden, durch die dritte elektronische Vorrichtung, zweiter Bluetooth-Anforderungsinformationen an die zweite elektronische Vorrichtung als Reaktion auf die zweite Operation, wobei die zweiten Bluetooth-Anforderungsinformationen angeben, die zweite Bluetooth-Verbindung mit der zweiten elektronischen Vorrichtung herzustellen;
Empfangen, durch die zweite elektronische Vorrichtung, der zweiten Bluetooth-Anforderungsinformationen; und
Herstellen, durch die zweite elektronische Vorrichtung, der ersten Bluetooth-Verbindung mit der ersten elektronischen Vorrichtung als Reaktion auf die zweiten Bluetooth-Anforderungsinformationen.

5. Verfahren nach einem der Ansprüche 1 bis 4, wobei das Verfahren ferner Folgendes umfasst:
Senden, durch die erste elektronische Vorrichtung, eines ersten Datenpakets an die zweite elektronische Vorrichtung durch die erste WLAN-Verbindung, wobei
das erste Datenpaket die Dienstdaten des ersten Dienstes und die Adressinformationen der zweiten elektronischen Vorrichtung umfasst und das erste Datenpaket durch die erste elektronische Vorrichtung durch Verschlüsselung basierend auf dem ersten Chiffrierschlüssel und Modulation basierend auf den WLAN-Fähigkeitsinformationen der zweiten elektronischen Vorrichtung erhalten wird.

6. Verfahren nach einem der Ansprüche 1 bis 4, wobei das Verfahren ferner Folgendes umfasst:
Senden, durch die erste elektronische Vorrichtung, eines zweiten Datenpakets an die dritte elektronische Vorrichtung durch die zweite WLAN-Verbindung, wobei
das zweite Datenpaket die Dienstdaten des zweiten Dienstes und die Adressinformationen der dritten elektronischen Vorrichtung umfasst und das zweite Datenpaket durch die erste elektronische Vorrichtung durch Verschlüsselung basierend auf dem zweiten Chiffrierschlüssel und Modulation basierend auf den WLAN-Fähigkeitsinformationen der dritten elektronischen Vorrichtung erhalten wird.

7. Verfahren nach Anspruch 1, wobei
der erste Dienst einer der folgenden Dienste ist:
ein Projektionsdienst, ein Sharing-Dienst und ein Multi-Screen-Collaboration-Dienst; und
der zweite Dienst einer der folgenden Dienste ist:
ein Projektionsdienst, ein Sharing-Dienst und ein Multi-Screen-Collaboration-Dienst.

8. Verfahren nach Anspruch 1, wobei das Verfahren vor dem Austausch der Daten des ersten Dienstes durch die erste WLAN-Verbindung durch die erste elektronische Vorrichtung und die zweite elektronische Vorrichtung ferner Folgendes umfasst:
Empfangen, durch die erste elektronische Vorrichtung, einer dritten Operation;
Senden, durch die erste elektronische Vorrichtung, von dritten Bluetooth-Anforderungsinformationen an die zweite elektronische Vorrichtung als Reaktion auf die dritte Operation, wobei die dritten Bluetooth-Anforderungsinformationen angeben, eine Bluetooth-Verbindung mit der zweiten elektronischen Vorrichtung herzustellen;
Empfangen, durch die zweite elektronische Vorrichtung, der dritten Bluetooth-Anforderungsinformationen;
Senden, durch die zweite elektronische Vorrichtung, von dritten Bluetooth-Antwortinformationen an die erste elektronische Vorrichtung,
wobei die dritten Bluetooth-Antwortinformationen angeben, dass die zweite elektronische Vorrichtung eine voreingestellte Vorrichtung ist;
Empfangen, durch die erste elektronische Vorrichtung, der dritten Bluetooth-Antwortinformationen; und
Herstellen, durch die erste elektronische Vorrichtung, einer dritten Bluetooth-Verbindung mit der zweiten elektronischen Vorrichtung basierend auf den dritten Bluetooth-Antwortinformationen.

9. Verfahren nach Anspruch 1, wobei das Verfahren vor dem Austausch der Daten des ersten Dienstes durch die erste WLAN-Verbindung durch die erste elektronische Vorrichtung und die zweite elektronische Vorrichtung ferner Folgendes umfasst:
Empfangen, durch die erste elektronische Vorrichtung, einer vierten Operation;
Senden, durch die erste elektronische Vorrichtung, von vierten Bluetooth-Anforderungsinformationen an die zweite elektronische Vorrichtung als Reaktion auf die vierte Operation, wobei die vierten Bluetooth-Anforderungsinformationen angeben, eine Bluetooth-Verbindung mit der zweiten elektronischen Vorrichtung herzustellen;
Empfangen, durch die zweite elektronische Vorrichtung, der vierten Bluetooth-Anforderungsinformationen;
Senden, durch die zweite elektronische Vorrichtung, von vierten Bluetooth-Antwortinformationen an die erste elektronische Vorrichtung, wobei die vierten Bluetooth-Antwortinformationen angeben, dass die zweite elektronische Vorrichtung eine nicht voreingestellte Vorrichtung ist;
Empfangen, durch die erste elektronische Vorrichtung, der vierten Bluetooth-Antwortinformationen; und
basierend auf den vierten Bluetooth-Antwortinformationen, Herstellen, durch die erste elektronische Vorrichtung, der ersten WLAN-Verbindung mit der zweiten elektronischen Vorrichtung gemäß dem 802.11-Protokoll.

10. Verfahren nach Anspruch 1, wobei das Verfahren vor dem Austausch der Daten des ersten Dienstes durch die erste WLAN-Verbindung durch die erste elektronische Vorrichtung und die zweite elektronische Vorrichtung ferner Folgendes umfasst:
Empfangen, durch die erste elektronische Vorrichtung, einer fünften Operation;
Senden, durch die erste elektronische Vorrichtung, fünfter Bluetooth-Anforderungsinformationen an die zweite elektronische Vorrichtung als Reaktion auf die fünfte Operation, wobei die fünften Bluetooth-Anforderungsinformationen angeben, eine Bluetooth-Verbindung mit der zweiten elektronischen Vorrichtung herzustellen; und
Herstellen, durch die erste elektronische Vorrichtung, der ersten WLAN-Verbindung mit der zweiten elektronischen Vorrichtung gemäß dem 802.11-Protokoll, wenn die erste elektronische Vorrichtung keine Bluetooth-Antwortinformationen, die durch die zweite elektronische Vorrichtung gesendet werden, innerhalb einer voreingestellten Dauer empfängt.

11. Verfahren nach Anspruch 1, wobei das Verfahren vor dem Austausch der Daten des ersten Dienstes durch die erste WLAN-Verbindung durch die erste elektronische Vorrichtung und die zweite elektronische Vorrichtung ferner Folgendes umfasst:
Senden, durch die erste elektronische Vorrichtung, der Adressinformationen der ersten elektronischen Vorrichtung und Kanalinformationen der ersten elektronischen Vorrichtung an die dritte elektronische Vorrichtung durch die erste Bluetooth-Verbindung;
Senden, durch die dritte elektronische Vorrichtung, erster WLAN-Verbindungsanforderungsinformationen an die erste elektronische Vorrichtung basierend auf den Adressinformationen der ersten elektronischen Vorrichtung und den Kanalinformationen der ersten elektronischen Vorrichtung, wobei die ersten WLAN-Verbindungsanforderungsinformationen angeben, die zweite WLAN-Verbindung mit der ersten elektronischen Vorrichtung herzustellen, und die ersten WLAN-Verbindungsanforderungsinformationen Informationen in einem spezifischen Format sind; und
Herstellen, durch die erste elektronische Vorrichtung, der zweiten WLAN-Verbindung mit der dritten elektronischen Vorrichtung als Reaktion auf die empfangenen ersten WLAN-Verbindungsanforderungsinformationen.

12. Kommunikationssystem, das eine erste elektronische Vorrichtung, eine zweite elektronische Vorrichtung und eine dritte elektronische Vorrichtung umfasst, wobei jede elektronische Vorrichtung Folgendes umfasst:
einen Speicher und einen Prozessor, wobei der Speicher mit dem Prozessor gekoppelt ist; und
der Speicher Programmanweisungen speichert, und wenn die Programmanweisungen durch den Prozessor ausgeführt werden, sind die erste, die zweite und die dritte elektronische Vorrichtung in der Lage, das Kommunikationsverfahren nach einem der Ansprüche 1 bis 11 jeweils durchzuführen.

## Revendications

1. Procédé de communication, comprenant :
la réception (S502), par un premier dispositif électronique, d'une première opération lorsque le premier dispositif électronique et un deuxième dispositif électronique échangent des données d'un premier service au moyen d'une première connexion Wi-Fi ;
l'établissement (S509), par le premier dispositif électronique, d'une première connexion Bluetooth avec un troisième dispositif électronique en réponse à la première opération ;
l'envoi (S511), par le premier dispositif électronique, d'informations d'adresse du premier dispositif électronique au troisième dispositif électronique au moyen de la première connexion Bluetooth ;
la réception (S511), par le troisième dispositif électronique, des informations d'adresse du premier dispositif électronique envoyées par le premier dispositif électronique ;
l'établissement (S513), par le troisième dispositif électronique, d'une deuxième connexion Wi-Fi avec le premier dispositif électronique sur la base des informations d'adresse du premier dispositif électronique ; et
l'échange (S515), par le troisième dispositif électronique, de données d'un deuxième service avec le premier dispositif électronique au moyen de la deuxième connexion Wi-Fi,
une table d'acheminement locale, pour utilisation pour l'échange de données respectif au moyen de la première connexion Wi-Fi et de la deuxième connexion Wi-Fi, du premier dispositif électronique comprenant une entrée d'acheminement du deuxième dispositif électronique et une entrée d'acheminement du troisième dispositif électronique,
l'entrée d'acheminement, obtenue au moyen d'une connexion Bluetooth entre le premier dispositif électronique et le deuxième dispositif électronique, du deuxième dispositif électronique comprenant :
des informations d'adresse du deuxième dispositif électronique, des informations de capacité Wi-Fi du deuxième dispositif électronique, et une première clé de chiffrement ; et
l'entrée d'acheminement, obtenue au moyen de la première connexion Bluetooth, du troisième dispositif électronique comprenant :
des informations d'adresse du troisième dispositif électronique, des informations de capacité Wi-Fi du troisième dispositif électronique, et une deuxième clé de chiffrement.

2. Procédé selon la revendication 1, le procédé comprenant en outre :
la réception, par le troisième dispositif électronique, d'une deuxième opération lorsque le troisième dispositif électronique et le premier dispositif électronique échangent des données du deuxième service au moyen de la deuxième connexion Wi-Fi ;
l'établissement, par le troisième dispositif électronique, d'une deuxième connexion Bluetooth avec le deuxième dispositif électronique en réponse à la deuxième opération ;
l'envoi, par le troisième dispositif électronique, d'informations d'adresse du troisième dispositif électronique au deuxième dispositif électronique au moyen de la deuxième connexion Bluetooth ;
lorsque le deuxième dispositif électronique et le premier dispositif électronique échangent les données du premier service au moyen de la première connexion Wi-Fi, la réception, par le deuxième dispositif électronique, des informations d'adresse du troisième dispositif électronique envoyées par le troisième dispositif électronique ;
l'établissement, par le deuxième dispositif électronique, d'une troisième connexion Wi-Fi avec le troisième dispositif électronique sur la base des informations d'adresse du troisième dispositif électronique ; et
l'échange, par le deuxième dispositif électronique, de données d'un troisième service avec le troisième dispositif électronique au moyen de la troisième connexion Wi-Fi.

3. Procédé selon la revendication 2, l'établissement, par le premier dispositif électronique, d'une première connexion Bluetooth avec un troisième dispositif électronique en réponse à la première opération comprenant :
l'envoi, par le premier dispositif électronique, de premières informations de requête Bluetooth au troisième dispositif électronique en réponse à la première opération, les premières informations de requête Bluetooth indiquant d'établir la première connexion Bluetooth avec le troisième dispositif électronique ;
la réception, par le troisième dispositif électronique, des premières informations de requête Bluetooth ; et
l'établissement, par le troisième dispositif électronique, de la première connexion Bluetooth avec le premier dispositif électronique en réponse aux premières informations de requête Bluetooth.

4. Procédé selon la revendication 3, l'établissement, par le troisième dispositif électronique, d'une deuxième connexion Bluetooth avec le deuxième dispositif électronique en réponse à la deuxième opération comprenant :
l'envoi, par le troisième dispositif électronique, de deuxièmes informations de requête Bluetooth au deuxième dispositif électronique en réponse à la deuxième opération, les deuxièmes informations de requête Bluetooth indiquant d'établir la deuxième connexion Bluetooth avec le deuxième dispositif électronique ;
la réception, par le deuxième dispositif électronique, des deuxièmes informations de requête Bluetooth ; et
l'établissement, par le deuxième dispositif électronique, de la première connexion Bluetooth avec le premier dispositif électronique en réponse aux deuxièmes informations de requête Bluetooth.

5. Procédé selon l'une quelconque des revendications 1 à 4, le procédé comprenant en outre :
l'envoi, par le premier dispositif électronique, d'un premier paquet de données au deuxième dispositif électronique au moyen de la première connexion Wi-Fi,
le premier paquet de données comprenant les données de service du premier service et les informations d'adresse du deuxième dispositif électronique, et le premier paquet de données étant obtenu par le premier dispositif électronique au moyen de chiffrement sur la base de la première clé de chiffrement et de modulation sur la base des informations de capacité Wi-Fi du deuxième dispositif électronique.

6. Procédé selon l'une quelconque des revendications 1 à 4, le procédé comprenant en outre :
l'envoi, par le premier dispositif électronique, d'un deuxième paquet de données au troisième dispositif électronique au moyen de la deuxième connexion Wi-Fi,
le deuxième paquet de données comprenant les données de service du deuxième service et les informations d'adresse du troisième dispositif électronique, et le deuxième paquet de données étant obtenu par le premier dispositif électronique au moyen de chiffrement sur la base de la deuxième clé de chiffrement et de modulation sur la base des informations de capacité Wi-Fi du troisième dispositif électronique.

7. Procédé selon la revendication 1,
le premier service étant l'un des services suivants :
un service de projection, un service de partage et un service de collaboration multi-écrans ; et
le deuxième service étant l'un des services suivants :
un service de projection, un service de partage et un service de collaboration multi-écrans.

8. Procédé selon la revendication 1, avant que le premier dispositif électronique et le deuxième dispositif électronique n'échangent les données du premier service au moyen de la première connexion Wi-Fi, le procédé comprenant en outre :
la réception, par le premier dispositif électronique, d'une troisième opération ;
l'envoi, par le premier dispositif électronique, de troisièmes informations de requête Bluetooth au deuxième dispositif électronique en réponse à la troisième opération, les troisièmes informations de requête Bluetooth indiquant d'établir une connexion Bluetooth avec le deuxième dispositif électronique ;
la réception, par le deuxième dispositif électronique, des troisièmes informations de requête Bluetooth ;
l'envoi, par le deuxième dispositif électronique, de troisièmes informations de réponse Bluetooth au premier dispositif électronique,
les troisièmes informations de réponse Bluetooth indiquant que le deuxième dispositif électronique est un dispositif prédéfini ;
la réception, par le premier dispositif électronique, des troisièmes informations de réponse Bluetooth ; et
l'établissement, par le premier dispositif électronique, d'une troisième connexion Bluetooth avec le deuxième dispositif électronique sur la base des troisièmes informations de réponse Bluetooth.

9. Procédé selon la revendication 1, avant que le premier dispositif électronique et le deuxième dispositif électronique n'échangent les données du premier service au moyen de la première connexion Wi-Fi, le procédé comprenant en outre :
la réception, par le premier dispositif électronique, d'une quatrième opération ;
l'envoi, par le premier dispositif électronique, de quatrièmes informations de requête Bluetooth au deuxième dispositif électronique en réponse à la quatrième opération, les quatrièmes informations de requête Bluetooth indiquant d'établir une connexion Bluetooth avec le deuxième dispositif électronique ;
la réception, par le deuxième dispositif électronique, des quatrièmes informations de requête Bluetooth ;
l'envoi, par le deuxième dispositif électronique, de quatrièmes informations de réponse Bluetooth au premier dispositif électronique, les quatrièmes informations de réponse Bluetooth indiquant que le deuxième dispositif électronique est un dispositif non prédéterminé ;
la réception, par le premier dispositif électronique, des quatrièmes informations de réponse Bluetooth ; et
sur la base des quatrièmes informations de réponse Bluetooth, l'établissement, par le premier dispositif électronique, de la première connexion Wi-Fi avec le deuxième dispositif électronique selon le protocole 802,11.

10. Procédé selon la revendication 1, avant que le premier dispositif électronique et le deuxième dispositif électronique n'échangent les données du premier service au moyen de la première connexion Wi-Fi, le procédé comprenant en outre :
la réception, par le premier dispositif électronique, d'une cinquième opération ;
l'envoi, par le premier dispositif électronique, de cinquièmes informations de requête Bluetooth au deuxième dispositif électronique en réponse à la cinquième opération, les cinquièmes informations de requête Bluetooth indiquant d'établir une connexion Bluetooth avec le deuxième dispositif électronique ; et
l'établissement, par le premier dispositif électronique, de la première connexion Wi-Fi avec le deuxième dispositif électronique selon le protocole 802.11 lorsque le premier dispositif électronique ne reçoit pas, dans une durée prédéterminée, des informations de réponse Bluetooth envoyées par le deuxième dispositif électronique.

11. Procédé selon la revendication 1, avant que le premier dispositif électronique et le deuxième dispositif électronique n'échangent les données du premier service au moyen de la première connexion Wi-Fi, le procédé comprenant en outre :
l'envoi, par le premier dispositif électronique, des informations d'adresse du premier dispositif électronique et des informations de canal du premier dispositif électronique au troisième dispositif électronique au moyen de la première connexion Bluetooth ;
l'envoi, par le troisième dispositif électronique, de premières informations de demande de connexion Wi-Fi au premier dispositif électronique sur la base des informations d'adresse du premier dispositif électronique et des informations de canal du premier dispositif électronique, les premières informations de demande de connexion Wi-Fi indiquant d'établir la deuxième connexion Wi-Fi avec le premier dispositif électronique, et les premières informations de demande de connexion Wi-Fi étant des informations dans un format spécifique ; et
l'établissement, par le premier dispositif électronique, de la deuxième connexion Wi-Fi avec le troisième dispositif électronique en réponse aux premières informations de demande de connexion Wi-Fi reçues.

12. Système de communication comprenant un premier dispositif électronique, un deuxième dispositif électronique et un troisième dispositif électronique, chaque dispositif électronique comprenant :
une mémoire et un processeur, la mémoire étant couplée au processeur ; et
la mémoire stockant des instructions de programme, et lorsque les instructions de programme sont exécutées par le processeur, les premier, deuxième et troisième dispositifs électroniques étant activés pour réaliser le procédé de communication selon l'une quelconque des revendications 1 à 11, respectivement.
